**Europäisches Patentamt**

**European Patent Office**

**Office européen des brevets**

(19)

(11) Publication number: **0 034 984**
**A2**

(12) # EUROPEAN PATENT APPLICATION

(21) Application number: **81400256.4**

(22) Date of filing: **19.02.81**

(51) Int. Cl.³: **H 04 N 9/60**

(30) Priority: **20.02.80 EP 80400243**

(43) Date of publication of application:
**02.09.81 Bulletin 81/35**

(84) Designated Contracting States:
**AT BE CH DE FR GB IT LI LU NL SE**

(71) Applicant: **Thomas, Walter Carl**
**P.O. Box 1917**
**Costa Mesa California 92626(US)**

(71) Applicant: **Thomas, Wayne William**
**P.O. Box 1917**
**Costa Mesa California 92626(US)**

(72) Inventor: **Thomas, Walter Carl**
**P.O. Box 1917**
**Costa Mesa California 92626(US)**

(72) Inventor: **Thomas, Wayne William**
**P.O. Box 1917**
**Costa Mesa California 92626(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Method, apparatus and process for generating television signals for viewing and reproduction of three dimensional holografic visual scenes.**

(57) Apparatus and process for generating television signals of a visual scene for viewing in three dimensions and holografic reproduction, comprises one or more conventional TV cameras, including one or more seperate color video camera tubes, each camera tube adapted to recieve light of one of the three primary colours. The camera tubes and lenses are aligned with one or more optical axes which are normally parallel and are spaced apart a selected distance in a horizontal plane. At least one plane may be rotated so that it can be turned through a small angle in such a direction as to intersect the other axes at a selected distance in front of the camera.

Synchronizing beams are provided for two subrasters in scanning of the camera tubes. During alternate scanning of the subrasters, injected control frequencies above horizontal line speed selectively mute or switch primary color signals creating vertical light sensitive color zones, which are vertically aligned at the beginning of each line scan by the camera horizontal sync pulse.

A special square lens adapter to be described in detail later intensifies the dimensional holografic effect. A special laser lighting system synchronized with the vertical and horizontal camera scanning sync will further process and intensify the three dimensional holografic visual scene, which is further processed for reproduction from tape to tape transfer, tape to film transfer, or transmitted in a normal fashion to conventional video carrier systems such as cable or satellite transmission. When the processed video signals are recieved and displayed on a conventional TV reciever the visual scene will be seen in three dimensional and holografic viewing.

.../...

EP 0 034 984 A2

FIG. 14

METHOD,
APPARATUS AND PROCESS FOR GENERATING
TELEVISION SIGNALS FOR VIEWING AND
REPRODUCTION OF THREE DIMENSIONAL
HOLOGRAFIC VISUAL SCENES

This invention lies in the field of television signal generation and processing. More particularly it concerns a system for generating and processing TV signals from a visual scene, in which a three dimensional effect can be observed in the displayed TV signals, by properly orienting the optical axes of the three camera tubes, and by alternately muting the signals from a first and third tube which are adapted to pass the first and third primary colors. This disclosure is a continuation in part from our previously filed application, application number 80400243.4 European Patent Office filed 20 Februrary 1980, namely, METHOD AND APPARATUS FOR GENERATING AND PROCESSING TELEVISION SIGNALS FOR VIEWING IN THREE DIMENSIONS AND MOVING HOLOGRAMS.

In the moving picture industry, displays of moving pictures have been prepared and displayed for observation with a three-dimensional effect. This has been accomplished by using two separate cameras, with optical axes spaced apart and nominally parallel, but converging at a selected small angle. The light reaching each camera is filtered with one or the other of two primary colors. The corresponding pictures are displayed sequentially, while one glass passes the first primary color and the second glass passes the second primary color. and requires the viewer to use special glasses.

In the field of television the applicants are unaware of any prior art which allows reproduction of a three-dimensional holografic visual scene useing conventional broadcasting and recieving systems. Other systems have been shown to display a dimensional image but only after altering the NTSC standard as required by the NAB and European broadcast standards. Other systems either require changing the basic structure of the television reciever or changing the required band-width for broadcasting, or require the use of special coded glasses for viewing a dimensional image.

The present invention relates to apparatus and process for generating television signals for viewing and reproduction of three dimensional holografic visual scenes without the use of special coded glasses, and the three-dimensional holografic effect is accomplished within the framwork of the NAB and European television broadcast standards, without changing the basic structure of the standard television reciever, comprises one or more conventional TV cameras, including one or more seperate color video camera tubes, each camera tube adapted to recieve light of one of the three primary colors. The camera tubes and lenses are aligned with one or more optical axes which are normally parallel and are spaced apart a selected distance in a horizontal plane. At least one plane may be rotated so that it can be turned through a small angle in such a direction as to intersect the other axes at a selected distance in front of the camera.

Synchronizing beams are provided for two subrasters in scanning of the camera tubes. During alternate scanning of the subrasters, injected control frequencies above horizontal line speed selectively mute or switch primary color signals creating vertical light-sensitive color zones, which are vertically aligned at the beginning of each line scan by the camera horizontal sync pulse.

A special square lens adapter to be described in detail later, intensifies the dimensional holografic effect. A special laser lighting system synchronized with the vertical and horizontal camera scanning sync will further process and intensify the three dimensional holografic visual scene, which is further processed for reproduction from tape to tape transfer, tape to film transfer, or transmitted in a normal fashion to conventional video carrier systems such as cable or satellite transmission. When the processed video signals are recieved and displayed on a conventional TV reciever the visual scene will be seen in three dimensional and holografic viewing.

It has been discovered by the applicants by experimentation that the human eyes percieve depth of field and stero-grafic information to the brain by the use of horizontal scanning of the optic nerves connected to the rods and cones of each eye through individual nerve bundles. That is the brain by use of it's optic nerve endings to the rods and cones of each eye scans oneeye in a clockwise horizontal fashion while simultainously scanning the opposite eye in a counter-clockwise horizontal fashion from the other side of the brain via way of it's respective nerve bundles. This phoenomen can be observed by alternately holding a red filter in front of one eye and then the opposite eye, while viewing TV tuned to display noise or 'snow' displayed on the TV screen. It can be observed that while the red filter is held between the first eye and the TV screen the raster or 'snow' displayed will appear to rotate in a horizontal clockwise fashion, while if the filter is changed to the opposite eye the TV display will rotate horizontally in a counter-clockwise direction.

In order to electronicly re-produce three-dimensional holografic and stero-grafic viewing of a visual scene without the aid of coded glasses or modification of the television reciever or film screen, the video signals of a TV camera must be converted to allow R,B,G, color rotation , or phasing, of injected control frequiencies that scan clockwise for a time frame, and counterclockwise during the second time frame or scan, thereby matching the physiological make-up of the brain's scanning as it horizontally scans the rods and cones of the human eyes, in a clockwise fashion for one eye and counter-clockwise for the opposite eye. The ability to polorize the 1st eye to one scan or time frame (sub-raster) of a TV display and simultanously polorize the opposite or second eye to the second scan(sub-raster) or time frame

-5-

of a TV display is accomplished in the following way.
(1) By injecting control frequiencies above line speed
at apx. one Mgz.; vertically aligned color zones are
encoded to a TV reciever which simulates the brain's
ability to horizontally scan rods and cones of the human
eye. (2) By phasing the RBG color rotation during switching of injected control frequiencies; vertically
aligned color zones are RBG rotated or polorized during
the 1st scan to correspond to the clockwise scanning of
the 1st eye from red to blue, during the time frame or
scan of the second sub-raster the control frequiencies
are BRG rotated, or phased, in a counter-clockwise
direction from blue to red, which corresponds to the
brain's ability to simultaneously distinguish primary
colors while scanning the optic nerves of each eye
horizontally in opposite directions.

the ability of the brain to not only horizontally scan
the optic nerves, but to simultaneously distingush
primary colors in a phased manner, (that is one eye
perdeves color encoding from a RBG rotation or phase
while the opposite eye percieves or registers color
rotation from BRG phasing.) allows us to electronicly
color encode a television camera.

## DESCRIPTION OF THE PRIMARY EMBODIMENT

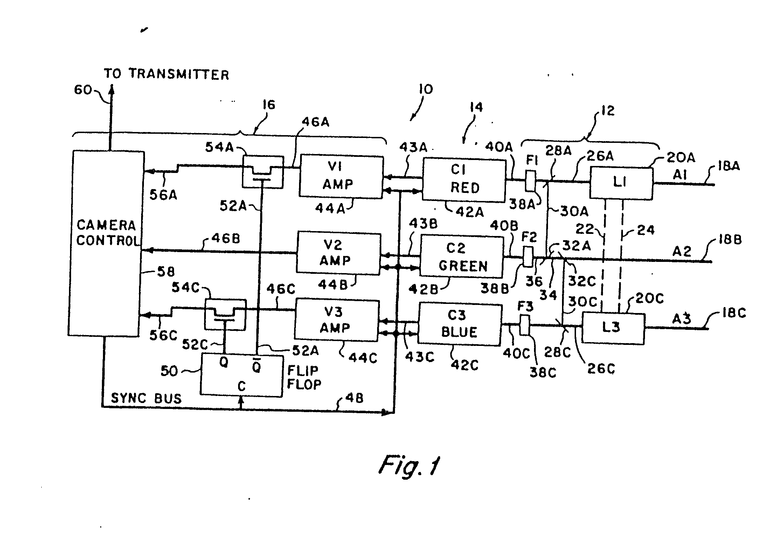

In the conventional television camera there are three video camera tubes, each one adapted to pass and process one of the three primary colors, such as, forexample, red, green and blue. In FIG.1, the first camera tube C1, number 42A processes the red light, camera tube C2, number 42B processes the green light and the third camera tube C3, 42C processes the blue light. The lines18A, 18B and 18C represent the three optical axes.. They are nominally parallel, and spaced apart a selected distance. When precisely parallel to each ot other, they will not transmit a three-dimensional signal. It is only when one or both of the outer optical axes A1 and/or A3 is rotated, so that it intersects the the center optical axes A2 at some selected distance in front of the camera, that the appearance of a three-dimensional picture will be evident. The details of rotating the optical axes will be discussed later.

In FIG. 1 two camera lenses are shownL1, numeral 20A and L3, numeral 20C,repectively in the optical axes A1 and A3. The dash lines 22 and 24 represent control means, which tie together the two lenses L1 and L3, so that as one is rotated the other one will be rotatedand the focus of each of them will track together and the zoom effect will also track. The precise directions of the three axes are important only in the region of the lenses L1 and L3. After that the optical axis moves into the camera but the pr precise position of the video camera tubes can be altered by the use of mirrors, etc. However, for convenience, and other reasons and without limitation the three video camera tubes C1, C2, and C3 will be described as co-axial of the lenses L1 and L3. As

−7−

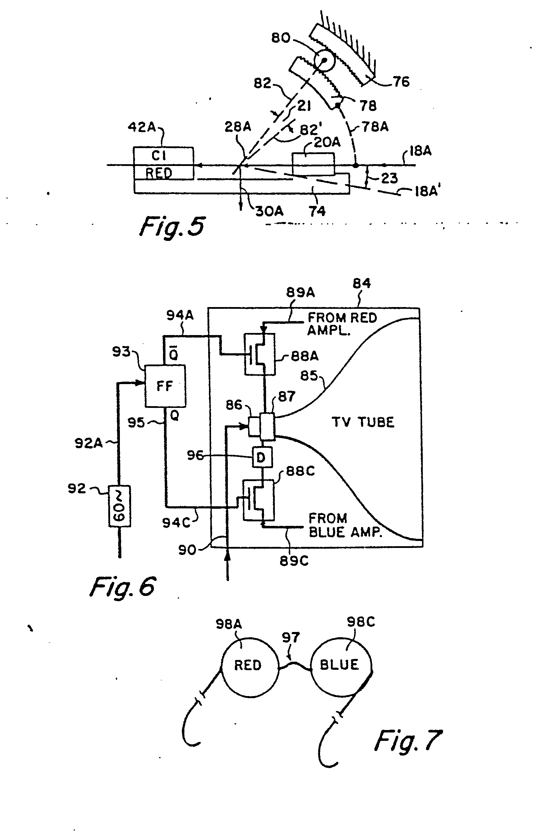

the axis A1 is rotated the lens and the camera tube will
be rotated together, as will be described in connection
with FIG. 5. However, by the same means as in FIG. 5,
the camera tube can remain stationary while the axis
rotates.

Consider the optical axis 18A. Light from a distant
scene, off to the right, arrives at the lense L1 and p
passes through the lens to be intercepted by partially
silvered mirror 28A which passes part of the light
through filter F1, numeral 38A and axis 40A to the
camera camera tube 42A. The filter F1 will, for
example, be such as to pass only the first primary
color, red.. The output signal of the camera 42A passes by leads 43A to the first video am lifier 44A for
processing.

Part of the light deflected by mirror 28A passes as
beam 30A to partially reflecting mirror 32A. This
light is diverted through beam 36, filter F2, numeral
38B and beam 40B,to the second video camera tube 42B.
Here the filter F2 is selected to pass the second of
the primary colors such as green, for example.

Along optical axes 18C light from the scene arrives to
the lens 20C and passes through the lens as beam 26C
to a partially reflecting mirror 28C that passes part
of the light to the filter F3 numeral 38C, beam 40C
to the third video camera tube 42C. The filter F3 is
designed to pass the third of the primary colors, namely
blue, for example. The output of the video camera C3
goes by leads 43C to the video amplifier B3 for processing.

The mirror 28C in the optical axis 18C transmits part
of the incoming light from lens L3 as beam 30C to a se
second partially reflecting mirror 32C which directs
the light by beam 34 through the mirror 32A as beam
36 to the filter F2 and to the second video camera
tube42B. In other words, lens L1 passes red light to
the first camera tube 42A, and part of the green light to the third video tubes C3 and some additional green
light to the second video camera tube 42B..

A camera control58 is provided as is customary
in the video camera, and no detail of this control is
required since the conventinal control can be used.
This camera control 58 provides a synchronizing buss 48
which provides signals to the video amplifiers and to
the camera tuves to control the synchronization of the
raster sweeps in all of the camera tubes and amplifier.
The camera control means 58 will provide two subscans
interlaced, as in the conventional TV system.  The
sync-buss 48 is connected also to a flip-flop 50 which
responsive to the synchronizing signal 48 is set to
provide a Q output on 52C, during one sub-raster and
a $\bar{Q}$ output on 52A during the second raster.  The video
tube V1 passes its output on lead 46A to an analog
switch 54A and the output of the switch goes by lead
56A to the camera control.  When there is positive signal
on lead 52A,  he analog switch will pass signals on le
46A through 56A to the camera control 58 in exactly the
same way that the signal goes from video amplifier V2
through lead 46B to the camera control.  On the other
hand, when there is no signal on lead 52A, the switch
54A will block the transmission of signal from 46A to
the camera control.

Similarly when there is positive signal on lead
52C, the signal from the video amplifier 44C will
go by lead 46C to the analog switch 54C, through lead
56C to the camera control,  just as in the case of the
video amplifier 44B.  However, when a logical zero
appears on the lead 52C, the switch 54C is opened or
disabled, and there is no ble signal output from the
video amplifier 44C to the camera control.

It is therefore clear that the flip-flop and the analog switches act as a synchronized switch, and other kinds of switches could be used, so that on the first raster the red signaland green signal are passed but no blue signal and on the second raster the green signal and blue signal are passed but no red signal..

The three video signals on leads 56A, 46B and 56C are then processed in the camera control to provide the transmitted signal 60 to the transmitter, and eventually to a television receiver.. To the normal eye the picture on the television receiver will look like any conventional picture in three colors and will be two-dimensional. However, if as shown in FIGURE 7 a pair of eye glasses 97 are provided, in which one lens 98A is red-passing glass, and the lens 98C in the other part of the eye glass 97 is blue-passing glass, then the right and left eye will ultimately see the blue picture and the red picture which are not precisely aimed at the same scene and therefore will show a three-dimensional optical effect.

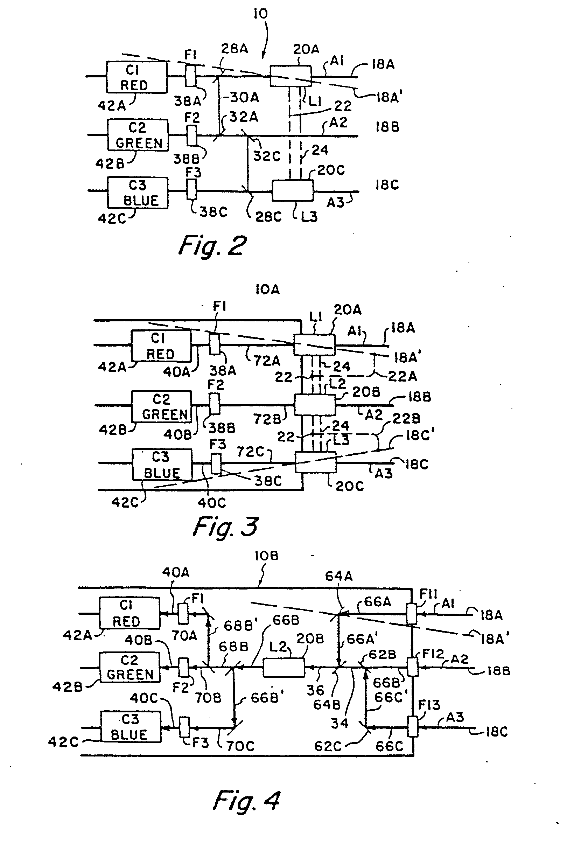

The lens and camera portions of the system of FiGURES 2, 3 and 4, which show respectively the use of two lenses 20A and 20C. In FIGURE 2 rhw axis 18A is shown tilted inwardly in accordance with the dash line 18A. The de description of FIGURE 2 is substantially identical to the portion of FIGURE 1 and will not be repeated.

In FIGURE 3 the lens and video camera tube and filter portions of the system of FIGURE 1 are reproduced, except that in FIGURE 3 there are now three lenses L1, L2 and L3, respectively numbered 20A, 20B and 20C, which define the three optical axes 18A, 18B and 18C. The three lenses L1, L2 and L3 are tied together by controls 22 and 24 as in the case of FIGURE 1, so that they will track each other on focus and zoom. No internal mirrors are needed and each lens supplies the light for one of the video cameras
Cl, C2 and C3.  The filters Fl, F2 and F3 are identical
to those in FIGURE 1, and the action is substantially
as described for FIGURE 1. In FIGURE 3 the rotation
of the two outer axes 18A and 18C to the position of
the dash lines 18A and 18C indicates that the two
outer axes rotated inwardly at an angle such as to
intersect the center optical axis 18B at a sekected
distance  in front of the camera.  These could becon-
trolled manually, as automatically or mechanically in
response to the focus control 22.   This automatic con-
tbol is shown by the dashed lines 22A. 22B from the ce
control 22 to the optical axes, 18A' and 18C'.

FIGURE 4 is another embodiment of the lens
and camera tube section indicated generally by numeral
10B.   Here a single lens L2 is utilized and all of th
lightgoing to the three video tubes 42A,42B and 42C
are supplied by the single lens L2, by mean of semitransparent mirrors, as is done in the conventional
video camera.  Thus the beam 66B is broken up into two
parts 66B which supplies the beam 70C through filter
F3 to the third camera C3.  Another part of the light
in beam 66B goes as beam 68B to a second partially
reflecting mirrow which diverts part of the light as
beam 68B' to another  completely reflecting mirror and
to the filter Fl and to the first video tube Cl.  Here
again the filter Fl passes red light to the video camera
tube.  The remaining part of the beam 66B goes as beam
70 B to filter F2 which passes green light to the
secondvideo camera tube 42B.

The main improvement in this embodiment is out in
advance of the lens where there are three spaced .
apart filters and spaced apart substantially
parallel optical axes 18A, 18B and 18C.  The filter
Fll passes red light similarly to FIGURE Fl to the
lens.  Filter Fl2 passes green light and is a substantially identical to filter F2.  Filter Fl3 passes

blue lights similar to that that of filter F3..
Thus filter F11 is in the optical axis A1 which
passes light of the first primary color through a fully
reflecting mirror 64A through a partially reflecting
mirror 64B to the lens L2.  Simialary the third optical
axis 18C passing through the filter F13 passes a blue
light as beam 66C to fully reflecting mirror 62C, to
partially reflecting mirror 62B, and on through to the
lens L2 and to the green second camera C2.  The green
light is defined by axis 18B and pa ses through filter
F12 and two partially reflecting mirrors 62B and 64B
through the lens L2 and through two additional
partially reflectingmirrors, to the filterF2 and to the
second video camera tube.  It will be clear that a
simple lens co-axil with each of the axes 18A, 18B
and 18C preferable in advance of the filters F11,
F12, F13 may serve to better define the three optical
axes.

Again, if the axes 18A, 18B, and 18C are precisely
parallel, therewill be no three-dimensional optical
effect; however, if the axis 18A is rotated inwardly
as shown by the dash line 18A' there will be some
contribution to three-dimensionality of the display.

One of the problems of rotation of the optical axis
in conjunction with the use of mirrors is important,
since the light passes through filter F11 must be pré-
cisely focused and positioned with the other two light
components, even though the axis 18A is rotated.  To
do this the axis 18A' is rotated at the center of the
mirror 64A as shown.

Referring now to FIG. 5 which is designed around the schematic diagram of FIG. 2 and FIG. 4, the nominal direction of the optical axis 18A is shown, and the rotated axis 18A' is shown. The center of rotation is at the center of the mirror 28A. In the drawing the element 76 is a stationary circular concave rack, and 78 is a circular convex rack, which is attached to, and moves with the axis 18A as shown by the dashed line 78A. Numeral 80 represents a small pinion positioned between the two racks 76 and 78. As the rack 78 moves through a selected angle say 10 degrees, the pinion 80 will move only half that distance. Thus as the axis 18A rotates to 18A' the plane 82 of the mirror 28A will rotate to 82' through an angle 21 just one-half of that of the angle 23 of axis 18A'. Thus angle 21 is one-half of angle 23.

As the axis 18A is rotated, and drives the rack 78 the mirror 28A will follow in proper angle, so that the entering light through the lens 20A will be precisely in the same beam 30A, even though the axis does change. Thus the picture passed through the beam 30A to the second camera tube will not move even though the optical axis changes.

As shown in FIG. 1 green light is supplied to the camera C2 from lenses L1 and L3. While the pictures will be stationary in view of the rotation of the axes 18A and 18C, the pictures that are represented will be slightly different and therefore there may be some minor blurring in the yellow picture in which case one of the other mirrors 28A or 28C can be removed so that the green light is supplied only by one lens L1 or L3.

-13-

In order to utilize the improved camera system of
FIGS. 1,2,3 and 4, all that is needed to view the
reproduced pictures in the receiver is the eye
glass 97 shown and described in FIG. 7. If the glasses
of FIG. 7 are not used, then the picture produced
by the television signals from FIG. 1 will look
like any conventional television signal and will be
only two-dimensional. However in a second embodiement
to be shown later in this disclosure glasses will
not be needed.

Referring now to FIG.6 there is shown an embodiment
in which the television receiver is modified to provide
a pseudo three-dimensional viewing. There will only be
a two-dimensional picture as is conventional. However,
what has been done is to take a synchronizing signal
either from the TV circuit on lead 90, or from the local
power sustem, 60 cycle power 92, which drives, through
lead 92A, a flip-flop 93. This flip-flop through the
Q and $\overline{Q}$ outputs, control two analog switches, 88A
and 88C. These switches sequentially control and mute
the red signal, and then the blue signal; one in one
sub-raster, and the other in the other sub-raster.
Thus the video amplifier outputs, on lead 89A, the red
signal, which goes through the switch 88A to the
coupling unit 87, to control the red gun. Similarly,
the blue signal from the blue video amplifier and
lead 89C goes through the switch 88C to control the
blue gun. But the Q and $\overline{Q}$ signals alternately mute the
red and the blue by putting a high signal, or logical
one, on the lead 94A to enable the red signal, or on
94C to enable the blue signal.. If desired 89C (or in
lead 89A) an analog phase shift or delay register 96
can be inserted in the lead so that the display of
the blue signal(or the red signal) will be delayed or
phase shifted from the display of the other signal, and
will give the impression of three-dimensionality.

— /4 —

What has been described is an improvement in video
camera and processing apparatus  for generating
television signals from a visual scene, such that
these signals when reprocuced in a receiver and
viewed with colored glasses will give the impression
of three-dimensionality, to the picture displayed on a
two-dimensional surface.  To be described later in
this disclosure a further improvement will show a
process and apparatus for generating television
signals when reproduced in a receiver and viewed
will give the impression of three-dimensionality
without the aid of colored glasses, to the picture
displayed on a two-dimensional surface.

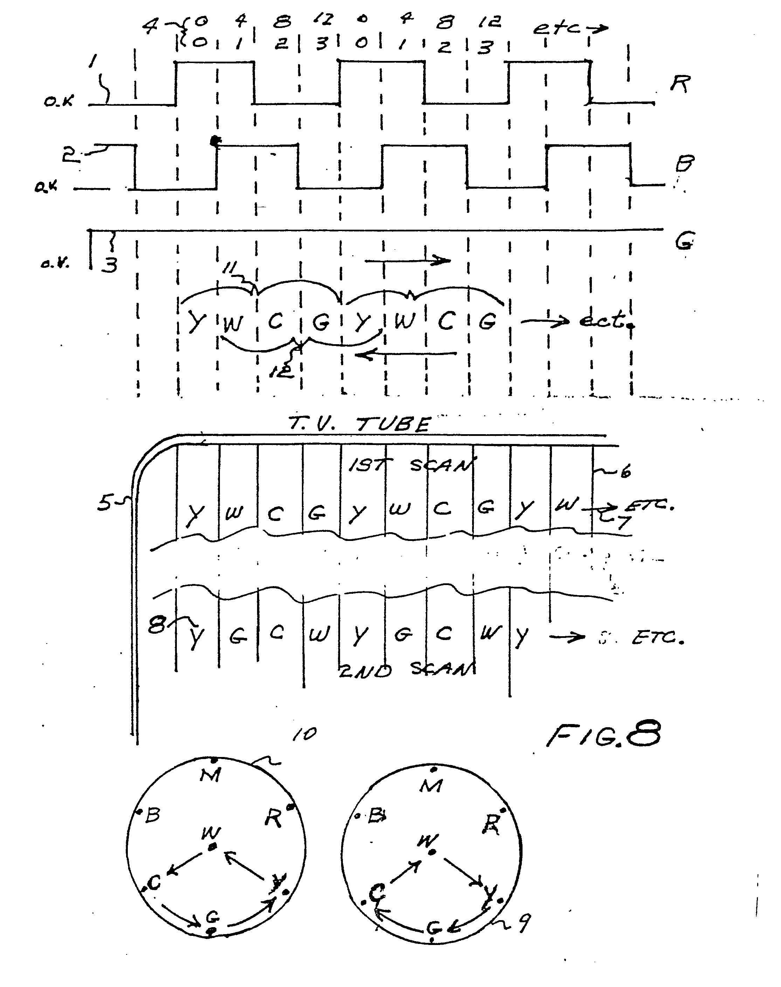

In FIG. 8 is shown a quadrature wave form that electronicly color encodes the TV camera allowing the television receiver to display information in a way that corresponds to the human brain's counter-clockwise and clockwise scanning of the rods and cones of the human eyes. By selectively muting the red and blue color signals of the television camera during alternate scans of time frames (sub-rasters) at frequiencies above line speed of the television camera; vertically aligned color zones are alternately quadraturely phased.

If muting of the red TV pick-up tube is represented by wave form(1) and muting of the blue TV pick-up tube of the television camera is represented by wave form (2) and the green tube is left un-muted as represented by by line(3) then in forword motion as time periods advance,(4) on the combined waveform 0,1,2,3,0 etc., the counter-clockwise scanning motion represented by color wheel chart (10) is realized. However as the time periods represented on line (4) are made to count backwards, i.e. 0,3,2,1,0 etc., then a clockwise motion is observed as indicated by color wheel chart(9). The resulting display or scan on a TV receiver (5) is a series of vertically aligned color sensitive bar zones selectively alternating to yellow, white, cyan, green, yellow, white cyan, green etc., which selectively phases the color zones for the 1st scan (7) or time frame in a counter-clockwise rotation (10). Line (8) represents the reverse phasing, yellow, green, cyan, white etc., or clockwise color scan (rotation) (9), which takes place during the alternate or second scan (8) or time frame (sub-raster).

— /6 —

The method and apparatus for processing three-dimensional holografic visual scenes for viewing on a television receiver has three main requirements:
(1) a specially designed square lens adapter, to be described in detail later,
(2) polorized vertically aligned color zones; for display of
(3) selective quadrature muting (above line speed-high speed) of the red and blue color signals of a television camera, counter-clockwise for the first scan (sub-raster) and clockwise for the second scan (sub-raster). That is; during the 1st sub-raster the primary colors as passed through the video amplifiers of a television camera are selectively muted at high speed(above line speed) in a counter-clockwise rotation of the color wheel (10) from yellow to white, to cyan, to green, and alternately; during the second scan or sub-raster the color signals are muted in an inverse rotation clockwise (9) from yellow, to green to cyan, to white, to yellow etc.. What has been described is a method and apparatus for processing and reproduction of a visual scene in three-dimensional and holografic stero-grafic viewing when displayed on a conventional television receiver.

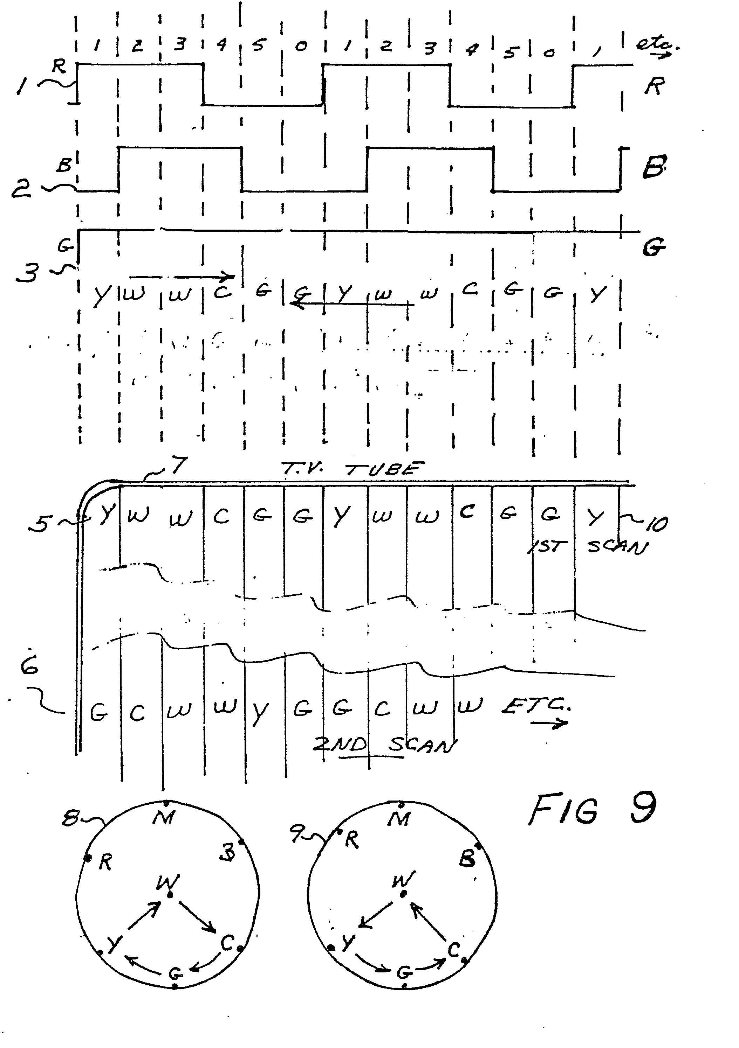

FIG. 9  TRI-PULSE PHASER WAVEFORM CHART

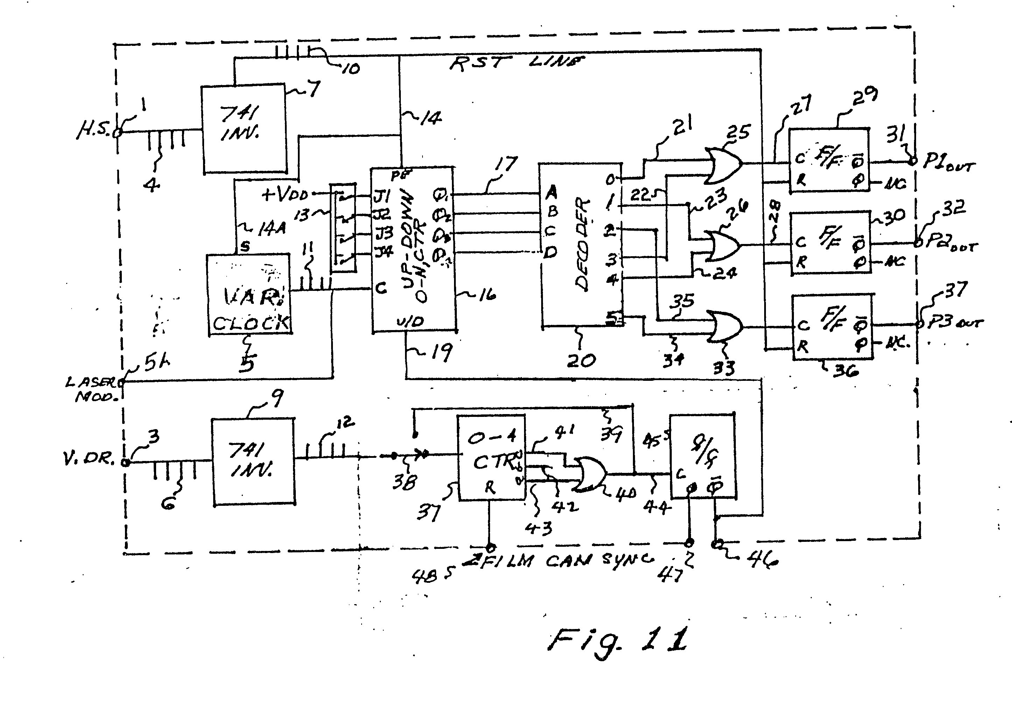

Fig. 9 represents an alternate hex-waveform for color
encoding the vertical aligned color zones with two of
the primary colors switching and one of the primary
colors locked on solid.  This gives a streched out
version of the quadrature switching shown in FIG. 8.
However, as shown in waveforms R(1)andB(2)this gives a
combination of sixty degrees and ~~ninty~~ _120°_ degree phasing
instead of the continous ninty degree phasing shown in
FIG. 8 (1&2) with wave forms R,(1)and B,(2), in combination with a third primary color G(3) blocked on;
thus a smoother color phasing control is achieved.
This results in forward counting a clockwise(8)phasing
of colors on a complete sub-raster (scan) of TV tube(7)
of yellow, white, white, cyan, green, green,(5)and a
reverse count of the second scan (sub-raster) clockwise (8)color phasing, of green, green, white, white,
yellow  (6)counting backwards from "0".  By resetting
the JAM outputs of switch(13)of FIG. 11 the scan will
start on a different number or position of waveform
R(1)and B(2) producing a different color balance
phasing,to correspond to different lighting conditions
avialable to the camara.

## THE DUAL PULSE PHASER

FIG. (10) is a dual pulse phaser circuit which is phase pre-settable and capable of pulsing the quadrature 90 degree phased waveform of FIG. (8) forward or backward for a selected time period which is also presettable both for the forward and reverse wave form rotation. This circuit will be utilized in subsequent diagrams or figures of various embodiments of the invention here in described. This switching circuit is synchronized to the TV camera from the camera sync generator outputs, horizontal sync (1), the 3.58 MHZ (2), and vertical drive (3). The outputs of this module or circuit board P1(31) and P2(32) will drive the transmission gates of the muting circuits of the camera circuits to be explained in later embodiments. The 3.58 MHZ sync (2) from the camera control unit CCU comes to the module in the form of a sine wave (5). This sine wave is converted to a positive pulse (11) by a dual 741 half wave rectifier circuit (8) which makes the signal capable or acceptable for the CMOS digital circuitry. These clock pulses inter the clock input of a presettable up-down 0-16 counter (16). This counter (16)is presettable by four binary on and off switches (13)which put a positive $V_{SS}$ voltage to the JAM inputs of the counter (16). This determines where the counter(16)will start counting, thereby determining the begning phase of the dualpulse generator. The negative horizontal sync pulse (1)coming from the camera control unit to be described later is inverted by 741 inverter(7)to positive reset pulses (11)which enter the up-down counter(16)via line (14)to the preset enable input of the counter( 16). This starts the counter at the predetermined number set by BCD jam input switches (13).

The presence of a positive 1 or 0 voltage on line (19)
input to the V/D input of counter (16)will determine
wheter counter (16)will count up in a forward manner
or backwards in a down or declinning order.   The
positive "one" or "zero" state , control line (19)
will depend on the previous processing of the vertical
drive (3)sync input from the camera control unit of
the TV camera.  These negative synce pulses are invertes
by the 741 chip inverter (3), known circruity, to
positive compatible pulses (10).  Switch (41)in the
position shown at (42)and (41)will route these vertical
sync pulses via line(43)to flip flop(18), bypassing the
PAL and film process &ync circuits to be described later.

The Q̄ output of flip-flop (18)controls or determines
wheter counter (16)counts up or down.  If Q̄ is a
positive "one" than counter(16)will count up or forward.
If Q̄ of flip-flop (18)is negative ground potential is
"zero" then counter (16)will count down or inreverse
order from it's presettable position(13), or phase over
and over again untill reversed by flip-flop (18).
Conversely, counter (16)will count up or forward from
it's preset enable JAM input (13) BDC count.. The counter
(16)will continue to count 0-16, over and over again,
untill it is reversed.The output of this counter is
fed via ABCD bus lines (17) to the ABCD (binary numbers)
input of the BDC (4)line to (16)line decoder (20).
This decoder converts the digital BDC binary count to
a decimal 1 to 16 output where the counts of 0,4,8, and
12 are connected via lines (21), (22) to "or" gate (25)
and lines (23)and(24)to "or" gate(26). At this point a
(on lines (27), and (28))quadrature count is generated.
However flip-flops (29)and(30)are needed to produce the
square wave ninty degree qudrature phased out put of
P1(31) and P2, ( 32), which serve as control pulses
for the analog switcher or transmission gates of the

-20-

primary color pulsed outputs of the subsequent camera
embodiments.

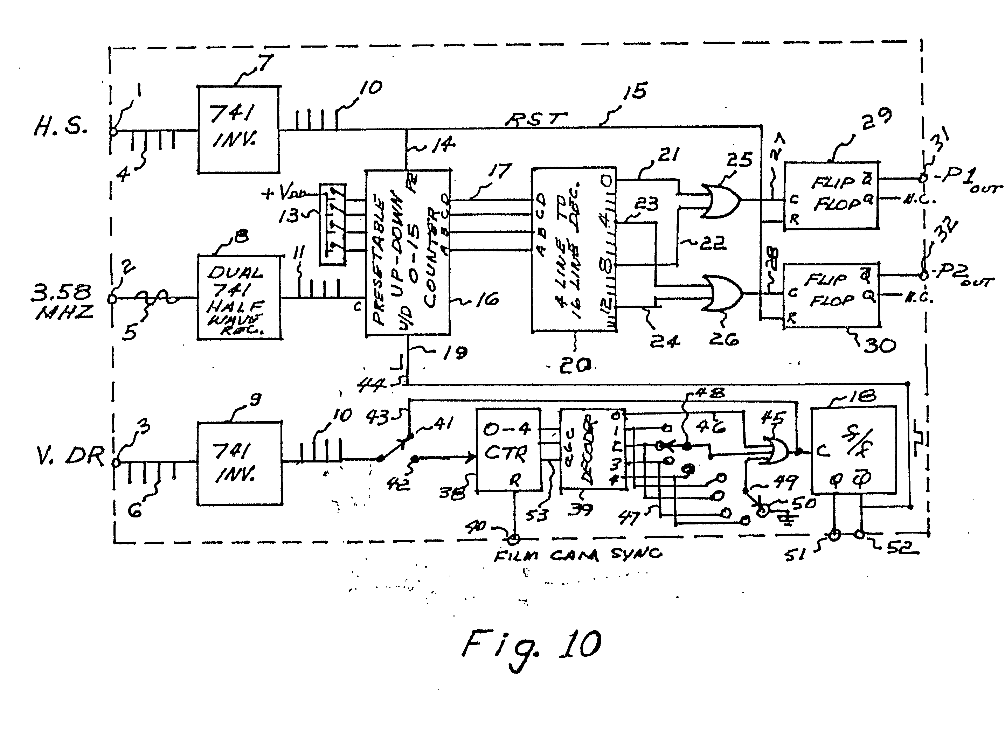

Counter (38), decoder (39), presettable switching
matrix (47)and "or" gate(45)as preset in FIG. 10
will cause the up-down counter(6)to forward count two
subrasters and reverse count three subrasters, long
enough for a complete 1/60th of a second scan on the
TV tube. This will enable the camera to do a 2, 3,
sweep subraster sequence necessary for an un-scrambled
three-dimensional holografic NTSC tape to film transfer.

By switching the preset switch from ground potential
(49)to decoder(39)output(4), a 2, 2, 1 sequence
suitable for PAL tape to film three-dimensional
holografic transfer is possible. The Q output of flip-
flop (18)serves as a. sync output for the five-bladed
film chain projector. What has been described is a
quadrature pulse module designed to produce the pulse
train required to generate the wave form outputs and
color phasing of electronic video signals as shown in
FIG. 8 which is essential to the process and method of
three-dimensional holografy reproduction of a visual
scene for viewing on television.

FIG.11 TRI-PULSE PHASER

In FIG. 11 the tri-pulse phaser circuit is described.
It is simular to the dual pulse phaser of FIG 10,
with the additional capacity of pulsing all three
of the primary color video signals.  However, inthe
described embodements  it may be used to pulse only
the first andsecond primary color signals by not connecting P3(37)and may be interchanged with the dual pulse
phaser of FIG. 10.  This tri-pulse phaser of FIG.11
also has the additional advantage of it's own variable
plus or minus one MHZ on board clock (5) which is
synchronized by reset line (14A) to insure straight
vertical lines of the resultant color sensitive zones
described in FIG. 8 and FIG. 9. The tri-pulse phaser
also has a simplified film camera sync system comprising,
of 0-4 counter (37), 'or' gate (40), and flip-flop (45).
Switch (38) as shown connected to counter(37)routes
vertical drive pulse(12)to the 0-4 counter (37) where
the BDC outputs A(one)41 and C(four)43 are connected to
'or' gate (40) to generate an output pulse on the counts
of 1,3and 4, for a unified sync transfer which will work
on both PAL and NTSC systems for dimensional holografic
film transfer systems.  It accomplishes this by sending
a change of 1 or 0 pulse to up-down counter (16)in a
2, 2, 1 sequence. Whathas been described is a tri-pulse
module designed to produce the pulse train required to
generate the waveform outputs and color phasing of
electronic video signals as shown in FIG. 9 which is
essential to the process and method of three-dimensionl
holografy reproduction of a visual scene for viewing on
television.

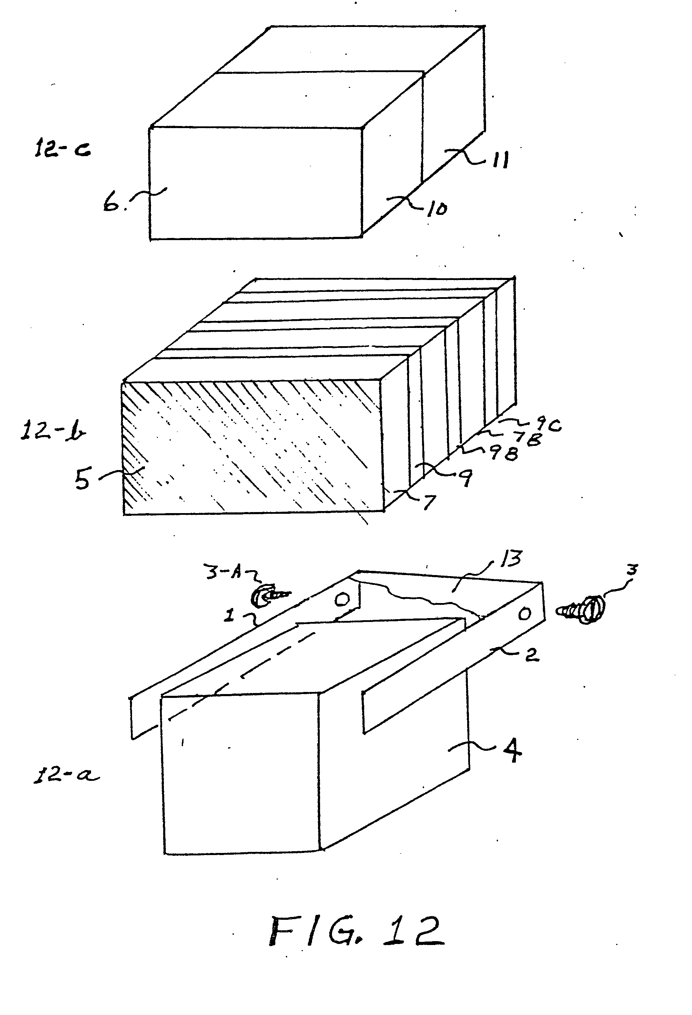

## FIG. 12 HOLOGRAFIC LENS

The holografic lens is a three-dimensional cube
or rectangle comprising; a solid cube,shaped
dimensionally square or rectangular, ground from
a solid glass or plastic material, or optionally
ground from two or more glass or plastic sheets
of a uniform thickness and density; or ground from
alternately layered high and low density plastic
and/or glass sheets and optionally tinted for
color encoding. One or more layers or planes may
be partially silvered and/or dichroicly tinted as
may be required for varying lighting situations or
desired effects, such as laser lighting vs. nominal
lighting.

The lens is normally placed in front of a conventional
camera lens, but could also be placed behind a
conventional lens or in a secondary light path
position, and may be used either for electronic
or film cameras. Also shown in FIG. 12-a is a
means for mounting the lens in front of a conventional
TV camera lens and lens hood comprising;a hood, or lens
shield into which the lens is fitted, and two side
brackets ( ) and ( ) extending rearward secured
to the conventional lens hood by two thumb screws( )
and( ).

DESCRIPTION OF THE PREFERRED EMBODIMENT

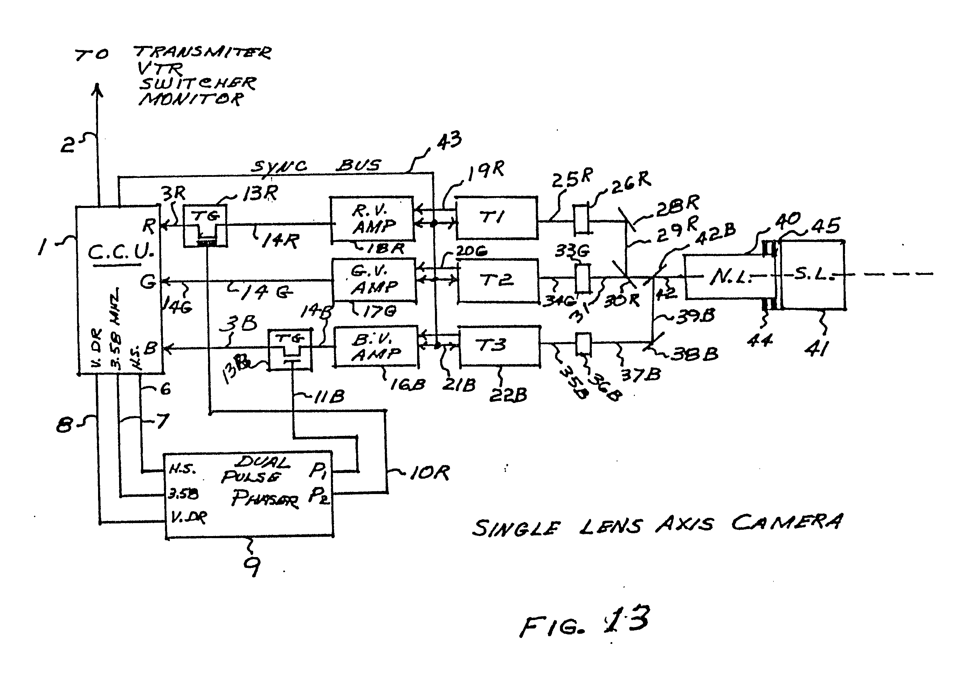

Referring now to the drawings, and in particular to
FIG. 13 there is shown one embodiment of this invention
which utilizes the dual pulse phaser(9) described in
FIG. 10 and optionally fitted with holografic lens(41)as
shown and described in FIG. 12.
Imagry light enters the square lens(41)where it is
dimensionally treated as described in FIG. 12, transverses
through normal zoom lens(40) and enters the diachroic
mirror and or filter system via light beam (42)where it
is split into three primary colors by partially silvered
glasses(30R) and (42B) where the red, green and blue
primary colors are split off to the red (26R) blue(36B)
and green(33G) color filters to the three primary scanning video pick up tubes(T1,T2,and T3), which are synchronized by camera sync bus (43).

Via(19R)(T1)feeds its red video signal voltage to the
red video amp(18R). Via(20G)(T2)feeds its green video
voltage to green video amp(17G). Simultaneously, video
pick-up tube(T3)passes its blue video voltage to the
blue video amp(16B). The green video amp feed it's
amplified video voltage to the camera control unit,
CCU, unaltered. However the Red voltage feed(14R)is
interupted or muted by transmission gate or analog
switch (13R)which is pulsed via lead(10R)from the(P2)
output pulse train of dual pulse phaser(9)which circuitry
is described in FIG. 10.

Conversely, the blue video amp(16B)feeds it's amplified
variable video voltage via line(14B)to transmission
gate or analog switch(13B)where it also is alternately
muted off and on by control pulse of the dual pulse
phaser(9)(P1)via line(11B).

−2⊬−

Dual pulse phaser(9)is synchronized to the scanning
tubes(T1)(T2)(T3) of the camera by the 15,734 hz
horizontal sync pulse output of the CCU(1)via line(6),
and the 60hz vertical drive sync output of the CCU(1)
via line(8).  The dual pulse phaser(9)is clocked
by the 3.58 MHZ output of CCU(1)via line(7).  The
processed three dimensional holografic signal is
outputed from the camera control unit(CCU)(1) via
line(2)where a three-diminsional holografic image
may be viewed on a standard television receiver.  The
video signal via line(2)may be recorded on a standard
video tape recorder, switched in a normal fashion by
a TV switcher, transmitted on conventional carrier
systems such as cable or sattelite transmission,
transmitted or recorded on video disc for reproduction
of a visual scene in three-dimensional holografic and
stero-grafic viewing on a standard television receiver,
without the aid of special viewing glasses as shown in
our preliminary embodiment FIG.7.

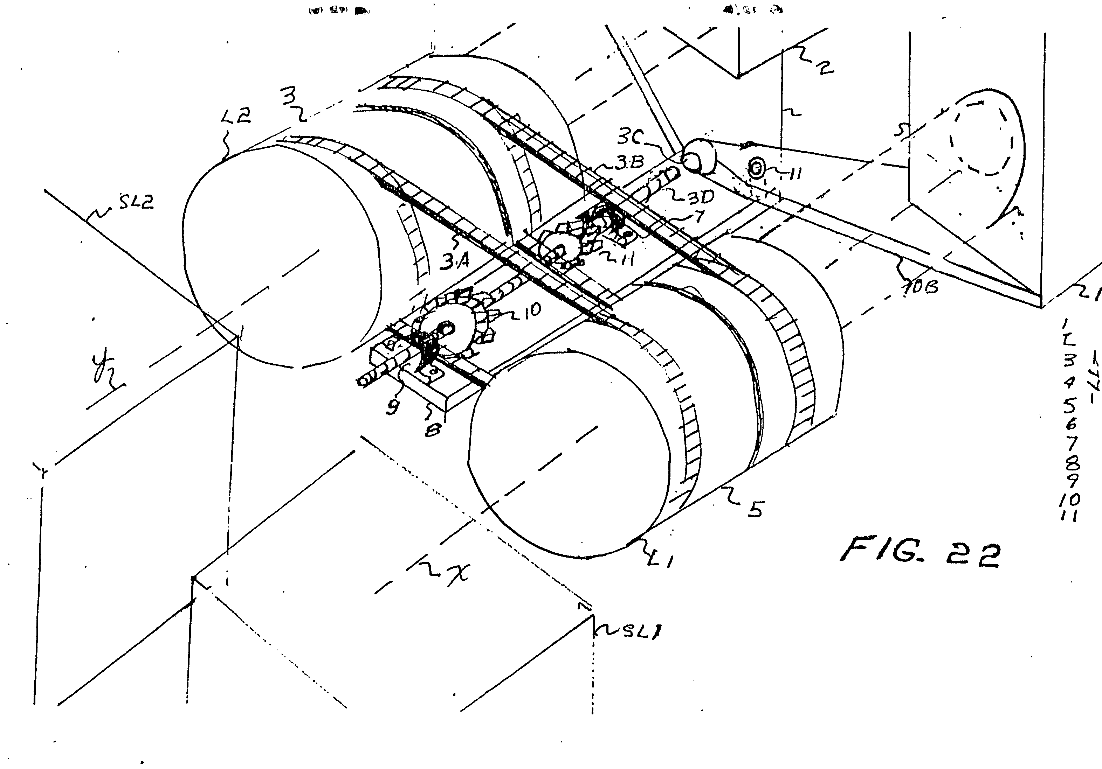

What has been described is a special lens system as
shown in FIG. 12 and FIG. 22 coupled with electronic
circuitry that switches or mutes the video color
signals of a conventional television camera to
produce phased light sensitive vertically aligned
color barr zones on a television receiver corresponding
to the human brain's horizontally phased scanning of
the human eyes rods and cones, to produce the electront
waveform outputs and color phasing as shown in FIG. 8
which are essential to the process and method of three-
dimensional,  · holografic reproduction
of a visual scene for viewing on television.

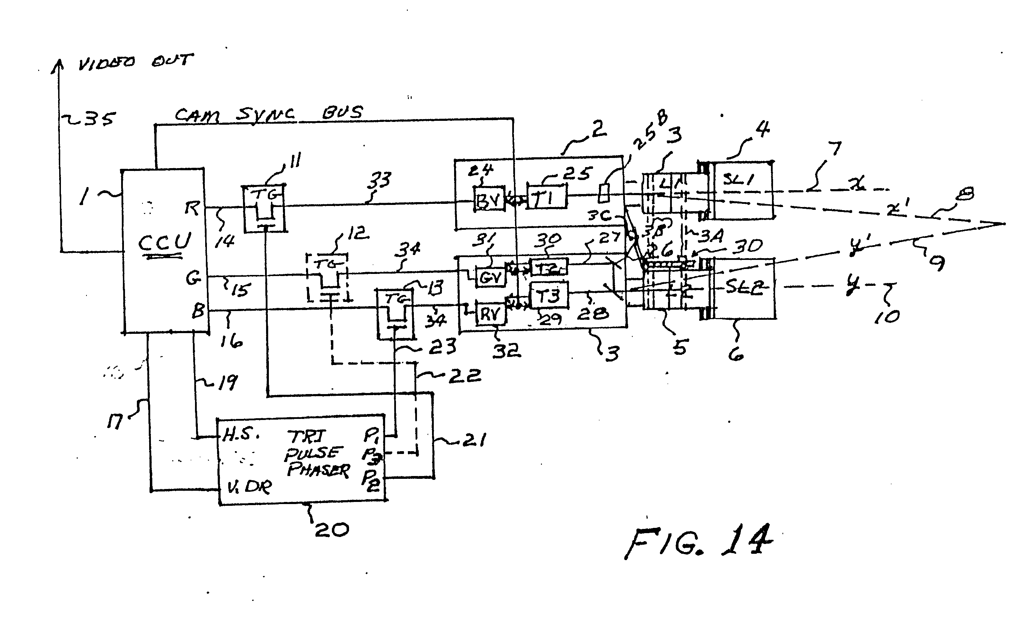

Referring now to the drawings, and in particular
to FIG. 14 there is shown one embodiment of this
invention which utilizes the TRI-PULSE PHASER(20)
described in FIG. 11 , and fitted with a dual lens
system as described in FIG. 22.

The FIG. 14 drawing represents a dual lens axis
embodiment electronicly simular to FIG.13 except
that the ~~dual~~ TRI pulse phaser 20 described by FIG.11
and shows anoptional TG analog switch(12) which may be
connected to(P3)of tri-pulse phaser(20)via line(22).
For a three phase continuous 60 degree three pulse
waveform chain from(P1)(P2)and(P3)to control TG
analog switches(11)via line(21),(12)via line(22), and
13)via line(23)to switch, or continuously mute primary
colors, red, blue, and green before entering the
camera control unit at RBG inputs via lines(14),(15),
and(16). Light imagry of the optical axis'x'enters
through square holografic lens(SL1)as described in
FIG. 12, continues through conventional zoom lens(L1),
and is filtered by blue color filter(25B), and is
scanned by pick-up tube(T1(25)). Light imagry of the
optical axis'y'enters through square holografic lens(SL2)
(6) as described by FIG.12 and continues through the
normal zoom lens(L2), and is filtered by diachroic
color filter system(26)with green imagry entering
TV camera scanning pick-up tube(T2 (30)) via beam(27)
and red imagry entering TV camera scanning pick-up
tube(T3(29))via light beam(28). The optical axis may be
rotated inwardly to intercept at any desired distance
as prescribed by the depth of field of the particular
initial pre-focus of lenses.(L1)and(L2)which are
mechanically linked by focus drive chain(3A)and zoom
drive chain(3B). The angle ofinterception of 'x'and'y'
is a function of zoom or drive chain(3A)which drives the dual ratio sprocketed worm gear 3D against
pinioned lever 3C to move the x axis inwardly or
outwardly as shown in FIG. 22. Drive chain 3B ties
slip rings 3 and 5 together which allows initial
pre-focus however from then onties focus to a
variable ratio of zoom.

The tri-pulsed phaser 20 is synched to the camera
control unit CCU 1 via line 19 to vertical sync.
The pulse phaser 20 has it's own in-board variable ±
one MHZ clock which may be adjusted for optimum color
phasing of the widthof the color sensitive bar zones.
To achieve the conbination the continuous 60°-120°
color phasing waveform represented by FIG. 9,
TG analog switch 12 must be removed from the circuit a
allowing the green video amplfier 31 to go un-muted to
the CCU 1 via line 15. Thus waveform switching and
light sensitive bar zones as represented by charts on
FIG. 9 are electronically produced giving the three-
dimensional stereo-grafic holografically encoded
video signal output on line 35 as the final output of
camera control unit 1 , which viewed on a conventinnal
television receiver or monitor reproduces a visual
scene in three-dimensions and stero-grafic holografic
image. What has been described is a special lens
system as described in FIG. 12 and FIG.22 coupled
with electronic circuitry as described in FIG.10
that switches or mutes the video color signals of a
conventional television camera to produce phased
light sensitive vertically aligned color barr zones
on a television receiver corresponding to the human
brain's horizontally phased scanning of the human eyes
rods and cones, to produce the electronic waveforms
outputs and color phasing as shown in FIG.10 which are
essential to the process and method of three-dimensional
stero-grafic and holografic reproduction of a visual
scene for viewing on television.

TWIN CAMERA EMBODIMENT

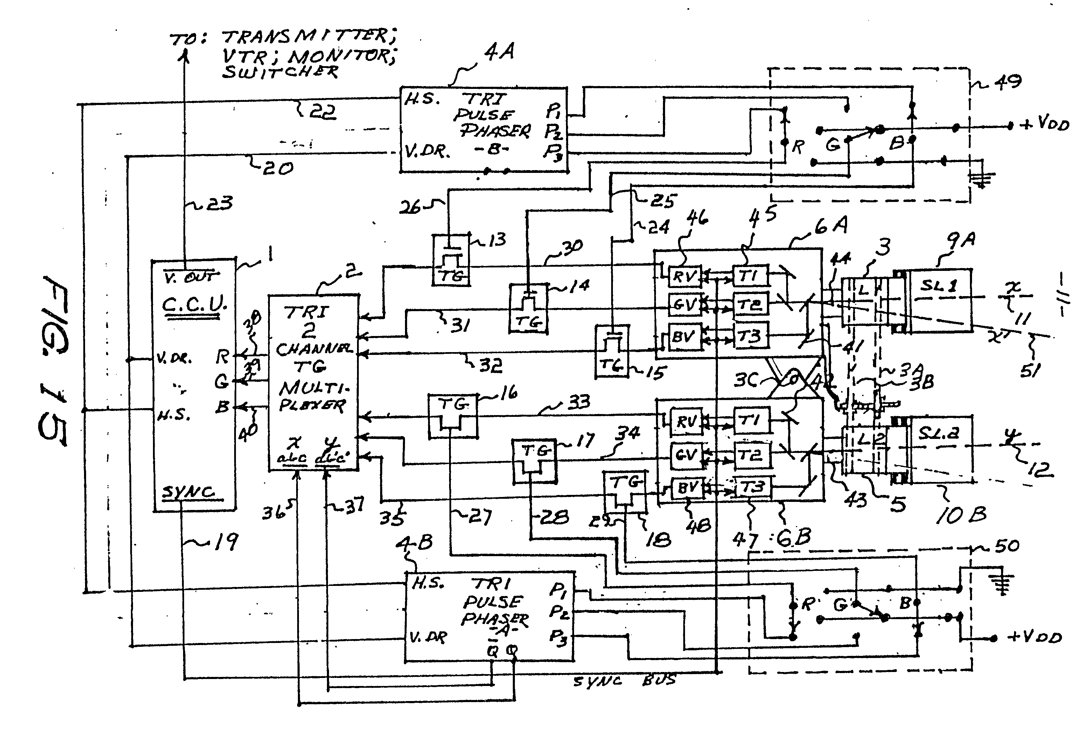

FIG.15 is an embodiment showing a method and apparatus
for processing video signal for television for the
reproduction of a visual scene in three-dimensional,
holografic and stero-grafic viewing on a conventional
television receiver comprising; two television cameras
combined as one system using twin holografic ( ) lens(  )
as described in FIG. 12  and focus mechanism described
in FIG. 22  and uses two tri-pulse phasers 4A and 4B
as shown in FIG 11, and a tri two channel TG analog
multiplexer (2) tod alternately multiplex the twin
cameras via line(38,39 and 40)to a single camera control
unit (1).  The'x'and'y'axis alignment may be controlled
using the dual lens zoom and focus mechanism(3A),(3B),
(3C) and (3D) as described in FIG. 22.

The two tri-pulse phasers(4A)and(4B) are sync bused to
horizontal sync via line(22)and vertical drive sync via
line(20). Cameras A and B are synced via camera sync
buss line(19).  The Q and $\overline{Q}$ output of tri-pulse phaser
(4B)is used to drive the multiplexing of channels x/abc
and y/a'b'c'  representing the switched or alternately
muted outputs of RBG of camera(6B), and (6A).

Switcher 49-R,G,B, and 50-R,G,B make this camera
presettable to available light conditions i.e. laser
light, studio light, or daylight conditions.

In this embodiment the green TG analog switches are
turned on by preset switcher 49-G and 50-G . This will
produce the 60°-120° waveform color phase switching
shown and described thereto in FIG.9, to be used for
normal studio lighting conditions.

Video out via line(23)from the CCU(1)to either switcher
transmitter studio monitor,satellite or cable carrier,
or reproduced on video tape, records, or disc, so that
a visual scene may be reproduced stereograficly  for
holografic and threedimensional viewing.

-28-

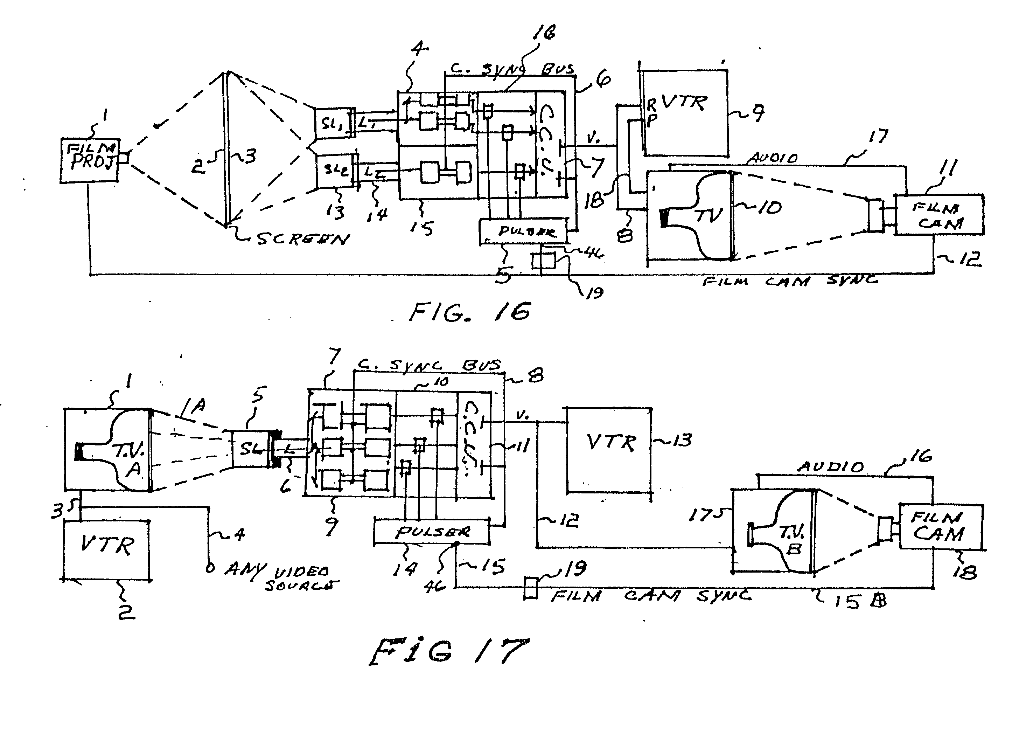

FIG.16 is an embodiment describing a method and
apparatus for processing and reproduction of
three-dimensional holografic and stereografic
transfers from: two-dimensional film to three-
dimensional holografic stereografic video tape
and two-dimemsional film to three-dimensional
holografic and stereografic film, which can be
transfered simultaneously, comprising; a five bladed
synchronous film projector (1) which is focused on the
back (2) of rear projection screen (3) and is powered
by sync converter power unit (19) which also powers:.
the sync motors of film camera(11). Sync converter
unit (19)derives it's sync pulse from $\overline{Q}$ (46)output of ·
the tri-pulse phaser shown in FIG.11. The three-
dimensional holografic camera (4) can be any of the
previous four embodiments of FIG.13,14,or15.

A film transfer can be made simultaneously during
film to tape transfer via lead(8).

A three-dimensional holografic video tape played on
Video tape recorder (9) and fed via line (18)to monitor
(10) and filmed by filmcamera(11)will produce a film
version          encoded with three-dimensional holografic
imagry.

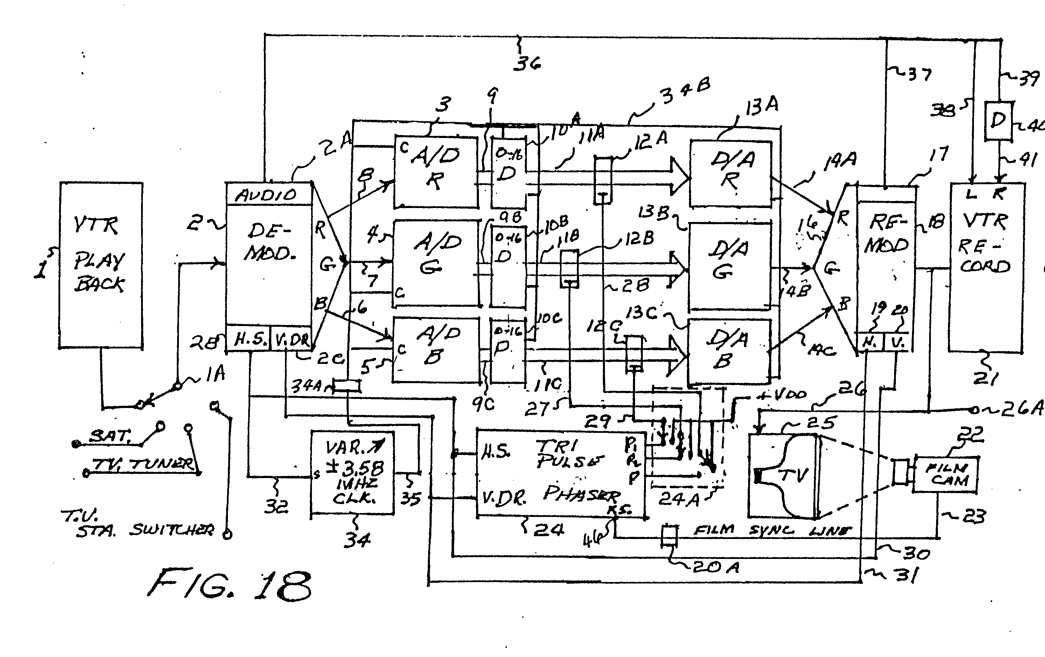

FIG.17 is an embodiment describing a method and apparatus
for processing two-dimensional pre-recorded video tape
electronic signals into three-dimensional transfers or
copies transfering simultaneously to video and film
reproductions for viewing visual scenes in three-dimensional holografic and stereografic viewing, which
comprises; taking the output of video tape recorder(2),
or any video source, to line(4) to standard television
monitor(1). Three-dimensional holografic camera(7),
(or any one of the three embodiments described in
FIGS. 13,14, or 15) is focused on the screen of monitor
(1) sending processed video imagry via line(12)
simultaneously to recording video tape recorder(13)
and TV monitor (17B) where film camera (18) photographs
moving pictures encoded with three-dimensional holografic
and stereografic imagry. Motion picture film camera(18)
is synced to television camera(7) by sync converter
power unit(19) via line (15B). The sync converter power
unit(19) is synced from Q̄ (46) output of tri-pulse phaser
of FIG.11 via line(15).

-30-

Referring now to FIG.18 thereis shown an embodiment
in which a two-dimensional visual scene from any
conventional video recording, film or disc source
or program may be processed and encoded into a
three-dimensional holografic reproduction of the
same visual scene and simultaneously or seperately
transfered to video tape or film, and by routing
the processed video signals through a conventional
video switcher said three-dimensional holografic
encoded video signals may be fed to conventional
distribution outlets such as a transmitter, satellite
uplink, cable system VTR and or processed for video
tape, video disc, or any other .distribution method
or apparatus which is designed to reproduce electronic
pictures from video signals of a said three-dimensional
holografic visual scene encoded by methods and apparatus
as described in this embodiment and other embodiments
of this disclosure.

This embodiment shows the original video signal coming
from video tape player(1) via switch (1A) to standard
demodulation chip or section(2), such as utilized in
standard and known and known demodulation circuits of
an ordinary television receiver.

At demodulation section(2), audio (2A) and horizontal(2B)
and verticaldrive sync signals are decoded and stripped,
Horizontal sync is sent to the tri-pulse phaser(24)
via sync bus (30) and returned to the re-modulation
section(18). The vertical drive sync portion of sync
is sent to the tri-pulse phaser via sync bus (31)and
routed on to the re-modulation section (18), where it
iscombined with horizontal sync into a composite sync
signal and modulated into the compositevideo re-
modulated signal.  Audio via line (36) is also routed
to the re-modulation section(18).

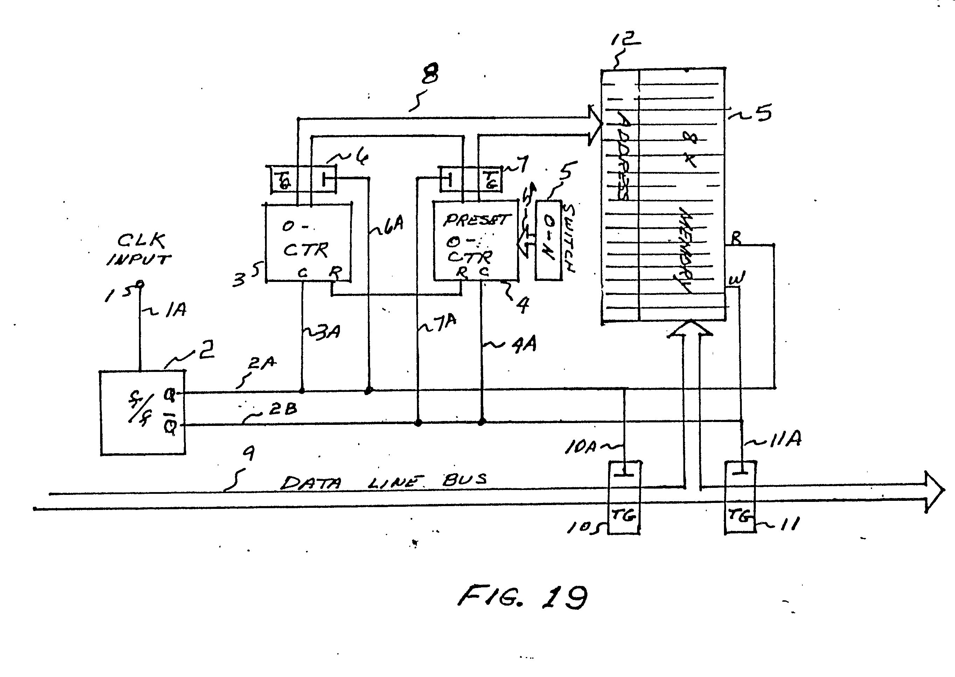

The remaining de-modulated red(8), green(7), and blue(6)video signals are routed from the de-modulation circuit to analog to digital converter[s](3), (4)and(5). The red digital signal(9)is routed to digital delay unit (10A to be described in FIG.19) where the imagry is optionally offset slightly 1to 16 mirco seconds to effect the psuedo three-dimensional effect.

Via word bus(1A) the digital red video voltage. is switched or processed by 8bit tri-state gate(12A) as pulsed by the tri-pulse phaser(24)via lead (28) through triple single throw preset switch (29A) connecting to (P3) of the said pulser(24).

In a similar manner the blue digital word voltages(9C) is processed. The varable digital delay is programed for O microseconds and enters the blue digial word bus (11C)where it is intercepted by tri-state 8bit switch(12C) which is controlled and switched by the (P) output waveform pulse of tri-pulse phaser(24)through switch (24A) andonward via lead (29) to the control gate (12C).

The green video digital word voltages in this embodiment is switched permantly on by switch(24A)to the $+V_{DD}$ buss bar-which turns on a logic 1 or positive.$V_{DD}$ voltage permantly to the gate of 8bit tristate logic switch(12B) to leave the green unmuted to process the video R,G,B voltages as shown in waveform charts of FIG.9.

Via digital word bus bars (11A), (11B), and (11C) the digital word values of the R,B,G, voltages are sent to digital to analog coverter (13A), (13B) and (13C) for conversion back to analog signalswhere they are routed individually ot the re-modulation(17) R,G,B inputs via lines (14A), (14B) and (14C).

-32-

The R,B,G video is then re-modulated in one RF envelope
also containing horizontal and vertical sync along
with audio and exited on bus (26) as a single RF video
signal to VTR recorder (21) and TV monitor(25) for the
filming process of film camera (22)which is synchronized
by filmsync power line(23)from the power.sync generator
(20A)which is controlled by the $\overline{Q}$ sync output pulse(46)
of tri-pulse phaser(24).  Video tape recorder(21)will
accomodate the optional psuedo stereo delay(40)via
lead(41).  Video output(26A)willfeedany video signal
user device to process and reproduce the three-dimensional psuedo holografic imagry.

FIG.19 shows a 0-16 micro-second digital line delay
capable of receiving and delaying a video signal on a
single bus utilizing 8bit tri-state buffers (10) and
(11) in conjunction with data bus (9) staggered or
delayed by counters (3) and (4) which are alternately
gated by 4bit tri state buffers (6) and (7) to
the memory address 12. A flip-flop (2) directs
traffic via control lines (2A) and (2B),
from Q and $\bar{Q}$, and is clocked and synchronized by clock
input (1) via line(1A) from the output of full wave
rectifier (34A), of FIG.18 which also runs or syncs
the A/D and D/A converters of FIG.18. By setting the
presettable digital switch (5) to any number between
0 and 15 a zero to 15 micro-second digital delay is
achieved and data is read off of data bus (9) from
memory (5) through 8bit tri state buffer gate (11).

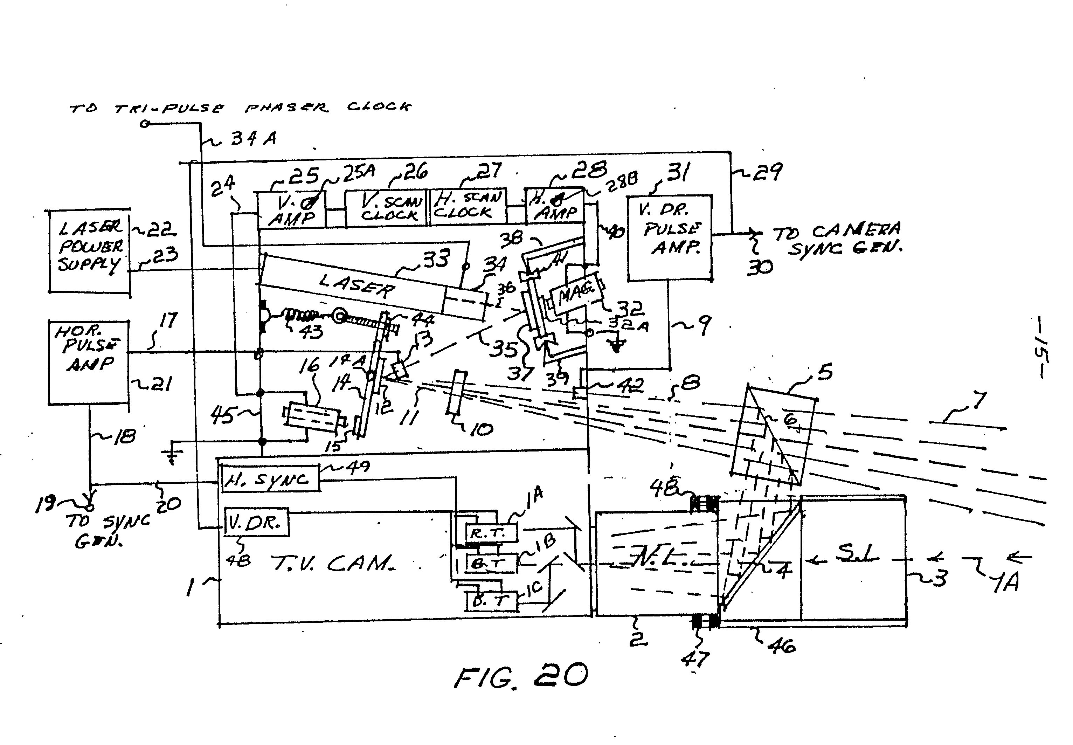

FIG.20 is a description of a synchronized scanning
laser lighting system which may be utilized with
any of the three-dimensional holografic camera described in FIG.13, 14, or 15. Instead of using
spreader lenses as has been employed in prior art
for laser holography in conjunction with TV lighting,
this embodiment shall employ a system of synchronized
scanning laser beams which is made to lock in step with
the scanning pick-up tubes of the television camera,
line for line in the subraster scan of the TV pick-up
tubes the laser is started simultaneously in step
at the same speed on each succesive line scan. The
TV camera will see at any precise moment of time only
the dot of light being lit or lighted by the laser on
the subject at that precise moment. The laser will be
made to scan at TV camera speed, 15,734 line scan per
second; 262 lines per 1/60th second for one sub-raster
or complete scan, sixty scans per second. The scanning
laser lighting system has the effect of multiplying the
the effective illumination power of the lasers on the
TV screen approximately 68,906 times or by the product
of the square of line count per subraster or complete
picture scan, and inversly diminishing khe apparant
needed intensity of the laser bythe same factor (namely,
1/68,906) making it safe to eluminate scenes with human
actors and making the laser light scan almost invisable.

Vertical drive clock (26) syncs vertical drive amp (25)
which via line (24) powers magnet (16) which causes
mirror (12) to oscillate at sixty cycles per second by
attracting and repelling magnet (15) mounted on
cantelever arm (14) which is pivioted at (14A) spring
balanced by adjustable screw connector (44).

15,734 Hz square wave horizontal scan clock (27) syncs
variable horizontal power amp (28) which powers electric magnet 32 via line (40) with horizontal speed, powers pulses which alternately atracks and repels permanent magnet (32A). This causes mirror (37) to **oscillate** at 15,734 Hz which deflects laser beam (34) beamed from laser (33) in a horizontal scanning motion reflected to mirror (12) where it is deflected in a vertical motion at 60 Hz to accomplish the subraster scan. The scanning laser beam, at the beginning of each horizontal scan crosses photo-transistor (13) which produces a horizontal sync pulse which via line 17 is fed to horizontal pulse amp (21) and onward via line (18) to synchronize the cammera and associated sync generators to run the horizontal deflection coils of the pick-up tubes (1A), (1B) and (1C) of television camera (1). The vertcal drive pulse is obtained in a like manner. Photo transistor (42) is positioned on the 1st scan of the 262 line scans downward from the viberating vertical scanning mirror (12). It's pulses via line (9) are fed to a vertical drive pulse amp (31) which feeds a vertical drive sync pulse via line (29) to the TV camera (1). vertical drive input circuits (48) which controls the vertical deflection coils of the TV camera pick up tubes (1A), (1B) and (1C).

As the laser beam is scanning it is passed through ¼wave retarder (10) which in conjunction with optical treatment by cube polorizing beam splitter (5) is adjusted to deflect a small percentage of the scanning laser beam power to half silvered mirror(4)back into the TV camera lens(2)for holografic light interference.

Reflected scanning laser light from the subject being taken is returned through holografic square lens (3) through the back of partially silvered mirror (4) through lens (2) to the R,B,G, scanning tubes (1A), (1B) and (1C) of the television camera.

Viberating mirrors (12) and (37) may optionally be replaced by a synchronously rotating morror system. The laser (33) may be frequency modulated by the laser modulator (34) which is control pulsed, modulated, by the output of the variable clock (5A) of tri-pulse phaser of FIG.11, via line (34A).

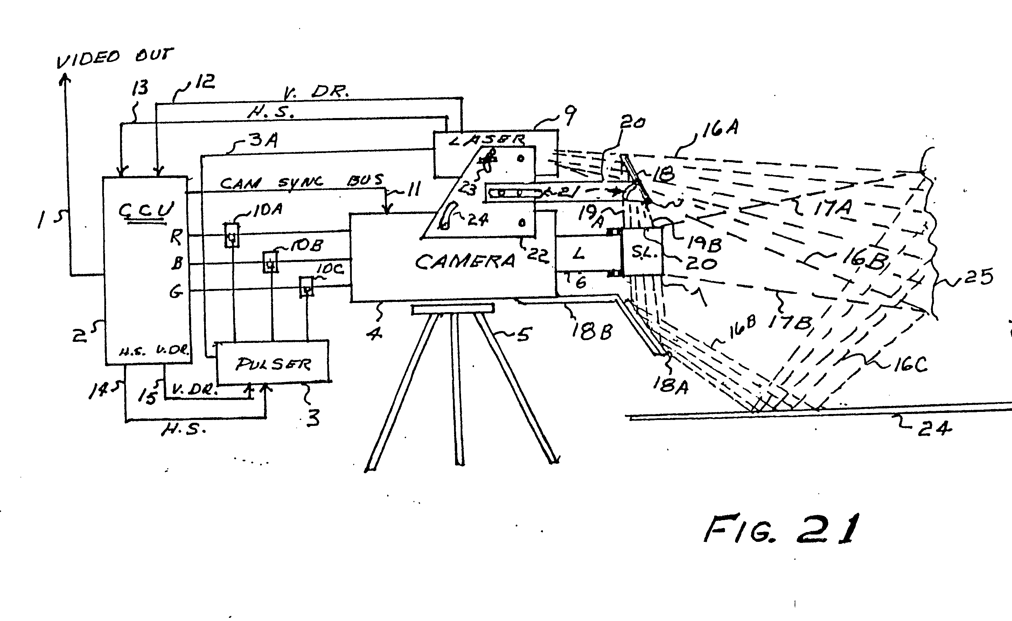

FIG.21 shows optional laser camera alignment of
the scanning laser system described in FIG.20 and
optional mirror positions in reference to the subject
which the TV camera is focused. TV camera (4) can be
any of the previous camera embodiments of Figures 13,
14, or 15. Laser (9) is the laser described in FIG.
20. Pulser (3) is the tri-phase pulser of FIG. 11.
An adjustable bracket 22 which has slotted groves (23)
(24) is means for position or alignment of laser (9)
to raster scanning of camera (4). Laser beam splitter
(18) is focussed and aimed or aligned by adjustable
slots (21), to direct laser scanning beam (19A-B) through
holografic square lens (20) as described in FIG. 12 to
mirror (18A) where scanning laser beam (16B) is aligned
to the studio floor(24) where some of the laser light
is reflected upward to the subject matter(25), and back
into the lens system (7) and (6).

The variable clock output of pulser (3),(the tri-pulse
phaser of FIG. 11) via line (3A) is fed to the modulator
(34 of FIG. 20) of laser (9). Laser (9) control unit
(2) via vertical drive pulses on sync line (12) and
horizontal sync pulse of line 13. The camera control
unit (2) in turn sends these sync signals to the camera
(4), via camera sync bus (11) and to the pulser (3) via
horizontal sync line (14) and vertical drive sync line
(15).

Fig. 22 is an exploded drawing of the cantelever 3C and fulcrum 10B chain driven 3A, & 3B, dual ratio sprocketed 10 &11, worm gear 3D ratio angle of interception of x & y optical axis. The optical axis x & y may be rotated inwardly to intercept at any desired distance as prescribed by depth of field of the particular initial pre-focus of lenses L1 & L2 which are mechanically linked by focus drive chain 3A and zoom drive chain 3B. The angle of interception of x & y is a function of zoom or drive chain 3A which drives the dual ratio. sprocketed worm gear rod 3D against pinioned lever 3C to move the x axis inwardly or outwardly from the y axis. Drive chain 3A ties slip ring s 3 & 5 together which allows initial pre-focus. From then on focus is tied to the variable ratio of zoom. The drive chains 3A and 3B are elastic flexable sprocked belts designed to accomodate the movement of the x and y axis. The belt driven sproket gear 10 is larger than gear 11 to give a larger ratio of zoom to focus movement. This ratio will vary with different lens.Worm gear rod 3D is gear driven by brakets 9 & 7, which are fastened to arm extension 8 which is fastened to the bottom of the body of camera and scanning tube housing 2. Square lens SL2 is connected to housing 2 and Lens L1 is connected to housing 1. Cantelever 10B is a plate connected to the bottom of housing 1. Square lens SL2 is connected to an extension of bottom plate 8, and square lens 1 is fastened to an extension of plate 10B.

What is claimed is:

1. Apparatus for generating and processing television signals of a visual scene for viewing in three-dimensions, comprising:

    (a) first, second, and third video camera tubes, each with their corresponding optical axes in a horizontal plane and nominally parallel to each other; each camera tube sensitive to light of a selected primary color, repectively;

    (b) means to transmit said visual scene light, of a first primary color to said first camera tube, light of a second primary color to said third camera tube;

    (c) means to drive the scanning systems in said three camera tubes responsive to a synchronizing signal in an interlaced first and second raster;

    (d) means to to mute the output signal of said first camera tube on said first raster; and

    (e) means to mute the output signals of said third camera tube on said second raster.

2. The apparatus as in claim 1 including;

    (f) means for rotating at least one of said first and third optical axes, inwardly, within said selected plane, so as to intersect said second optical axis at a selected distance in front of said camera tubes.

3. The apparatus as in claim 2 including;

    (g) means to process and transmit the combined output signals from said three camera tubes to a video receiver, and to display said rasters; and

    (h) means for a viewer to view said displayed rasters with eye glasses in which each eye is provided with one of said first and third primary olors.

4. The apparatus as in claim 1 in which said means to mute the output signal of said first and third cameras comprises;

    (a) analog switch means connected in the output leads of said first and third camera tubes, in which said first camera tube output goes to a first analog switch means and said third camera output goes to
a second analog switch means;

(b) synchronous switching control means controlled by
said synchronizing signal;

(c) one output of said switching control means connected to enable said first . analog switch means; and

(d) a second output of said switching control means
connected to enable said second analog switch
means, said first and second outputs out of phase
with each other.

5. The apparatus as in claim 1 in which said means to
transmit light from said visual scene comprises;

(a) a first lens along said first axis for passing 1
light through a second color filter to said second
camera tube;

(c) a third lens along said third axis for passing
light through a third color filter to said third
camera tube.

6. The apparatus as in claim 1 in which said means to
transmit light from said visual scene comprises;

(a) a first lens along said first axis for passing
light through  a first color filter to said first
camera tube, and for passing light through a second
filter to said second camera tube;

(b) a second lens along said third axis for passing
light through a least a third color filter to said
third camera tubel

7. The apparatus as in claim 6 includingmeans for
passing light from said second lens also through a
second filter to said second camera tube.

8. The apparatus as in claim 1 which said mean to
transmit light from said visual scene comprises;

(a) a lens;

(b) means between said lens and said camera tubes to
transmit light through a first color filter to said first camera tube, and to transmit light through
a second filter to said second camera tube, and to
transmit light through a third filter to said third
camera tube;

(c) means in front of said lens, to provide light to
said lens from said scene along a first axis spaced
from,and substantially parallel to a second axis,
which is the axis of said lens, and a third axis,
spaced from and substantially parallel to said
second axis, on the opposite side of said second
axis from said first axis; all three axies in a
horizontal plane; and

(d) a first color filter in said first axis; a
second color filter in said second axis; and a third
color filter in said third axis.

9. The apparatus as in claim 8 including means to
rotate at least one of said first and third axes so
as to intersect said second axis at a selected distance
in front of said lens responsive a focus control means
of said lens.

10. In a television camera and display system
comprising;

(a) an optical system defining three nominally
parallel, spaced, optical axes, in a horizontal
plane, the first and third axes on opposite sides
of said second axis.

(b) means to transmit light arriving from a viewing
scene along said first axis to a first video camera
tube, through a first light filter that passes a
firstprimary color;

(c) means to transmit light arrivingalong said secoond
axis to a second video camera tube, through a
secondlight filter that passes a second primary
color;

— 4 —

(d) meansto transmit light arriving alnng said
 third axis to a thirdvideo camera tube through
 a third light filterthat passes a third primary
 color;

(e) synchronizing means to provide first and
 second rasters interlaced;

the method of operating said television and
display system, comprising the steps of:

(1) muting the video output signal of said first
 camera tube, on said first raster;

(2) muting the video output signal of said third
 camera tube on said second raster; and

(3) viewing the video picture on a receiver tube
 through eye glasses in which one glass passes
 said first primarycolor, and the second glass
 passes said third primary color.

11. The method as in claim 10 including the additional step of rotation, in the common plane, at
least one of said first and third axes toward the
other so as to intersect at a selected distance in
front of said cameras.

12. Apparatus for providing a television display
having a pseudo three-dimensional character
comprising;

 (a) a conventionaltelevision (TV) receiver
 supplied with a conventional TV signal having
 signals components for control of three color
 guns reproducing the three primary colors, such
 as red, green and blue, for example, and having
 video amplifiers for amplifying at least said
 red and blue ignals,

 (b) at least two separate analog switch means
 to controlthe passage of said red and blue signals
 to saidcorresponding red and blue guns respectively
 ; and

(c) means to sequentially enable one and then the
other of said two analog switch means so that
the red signal is muted during one sub-raster,
and the blue signal is muted during the other
sub-raster.

13. The apparatus as in claim 12 including means
to inject a selected small phase shift in one or the
other of said switched red and blue signals.

14. Method and apparatus means for processing television
signals for viewing visual scenes in three-dimesional
holografic and sterografic aspect, comprising;

    a.means for muting or switching the output of
      at least one of the tubes of a conventional
      television camera or cameras(49&50 of FIG.15)
      or relating video signals (FIG.18) in a video
      recorder, transmitter or switcher, using high
      speed muting of frequencies above line speed
      which alternatly switches said pulsed color
      zones or vertically aligned barrs in said
      phased meansfrom field to field at camera sync.

    b.means and apparatus for muting or switching
      one or more of the video outputs of a color
    television camera, processing color sensitive
    light zones (FIG.9)vertical bars which polorize
      the human eyes so that as a special layered
      mirror system of said FIG.12 is utilized in
      front of a conventional camera lens, a three-
      dimensional holografic visual sceen is processed (FIG.16&17) for viewing on television
      without the aid of special viewing glasses
      worn by the viewer.

    C. means and apparatus for accomplishing full
      color holography by said means of at least
      one layered dichoric mirror positioned forward
      $0°$ to $90°$ from the placement of said conventional
      camera lens.

    d. means and appartatus for collecting nominal
      light patterns and coherant light utilizing selective
      encoding means of said dichroic mirrors(9B&7C
      of FIG.12-b)

    e. means to tint the said mirrors (5 of FIG.12)
      for color encoding a selectd color utilizing
      alternating high and low density reflective
      layered glass or plastic sheets (7,9,9B,7B,9C
      of FIG. 12).

f. means for processing nominal and coherant
   light so that during processing at least one
   primary or secondary color corresponds to one
   of the said light sensitive zones(as in claim
   14a)means created by the said high speed muting
      circuits (FIG.8&9) and said related light
   path-mirror angles (FIG.21&22).

g. means and apparatus for synchronously modulating
   or pulsing said laser or lasers with a variable
   high speed clock which also drives the said high
   speed muting circuits. (FIG. 21-3A)

h. means and apparatus for imaging coherant light
   or nominal light to the said camera lens by
   use of  said holografic lens (FIG.12) normally
   placed in front of a conventional camera lens
   but optionally positioned in a secondary light
   path of any electronic or film camera;ground
   from two or more glass or plastic sheets (FIG.
   12.-10&11) of a uniform thickness and density,
   or ground from alternately layered high and low
   density plastic or glass sheets (5,7,9,9B,7B,9C,
   of FIG. 12-b) optionally tinted for color encoding,
   said lens shaped dimensionally square (12-a), or
   rectangular (12-c).

i. means for mounting said holografic lens (FIG. 12)
   in front of a conventional camera lens and/or lens
   hood;means and apparatus (13 of FIG. 12) comprising,
   a hood and/or lens shield(13 of FIG. 12) into
   which the lens is fitted, and two side brackets
   (1&2 of FIG. 12) extending rearward secured to
   said conventional lens hood by two thumb screws
   (3&3A of FIG.12).

j.means and apparatus for mounting said lasers
   or laser to said camera or cameras as in claim
   14-g (3Aof FIG.21&20).

k. clocking means to squentially phase RBG video
signals above line speed of said muting and pulsing
   circuits as (11) in claim 15 ; phasing said video
   signals of the red, blue and green cameras to
   correspond to the human brain's horizontal (FIG.8&9)
   scanning of the rods and cones of the human eyes.
   (36&37 of FIG. 15).
l.means to process vertical lightsensitive zones
   in a color television receiver, switchermeans,
   video tape means , recording means, transmitter
   means, satellite up-link means, cable carrier
   system means, for processing and distrubution
   of said three-dimensional holografic video
   signals by means of said circuitry as in claim 15
   & 14a of FIGs. 10,11,12,13,14,15,16,17,18,19,20,
   21,22, as in claim 14-a,b,c,d,e,f,g,h,i,and j.


15. Means and apparatus for processing phased electronic
   waveforms for electronic color rotation ,above line
speed,of color pickup tubes of a television camera or
   color guns of a television receiver or corresponding
   video signals of video computer software, comprising;
   a. pulse control module means to pulse TG analogue
      switches which mutes red, blue and green video
      signals of a television or receiver above,line
      speed,generating said electronic waveforms for
      electronic color rotation of the color pickup
      tubes of a television camera or television
      receiver or corresponding video signals of video
      computer software.
   b.said sync clock means to generate control of
      TG analog switches (FIG.13,14,15,16,17,18,& 21).

c.means to switch on and off said red, blue and
 green video signals at speeds ofabove horizontal
 line speed,($\pm$ 1 MHZ.)

d. synchronous control pulse means

e. said pulses divided and multiplexed by
    presettable up-down O-N digital counter means.

f. multiplexer decoder means (20 of FIG.11)
 for said counter to drive digital multiplexer
 decoder.

g.means for said counter to drive digital O--N
    multiplexer decoder (20 of FIG.11)

h.means for said decoder to pulse three dual
    input OR gates (25,267330f FIG.11), in hop-scotch
    .order.

i. means to connect inputs, one of each three
    said OR gates to first three selected outputs of
    said multiplexer decoder (20 of FIG.11).

j. means to connect the remainning inputs of said
    three dual input OR gates successively in order
    to the last three successive selected outputs of
    said multiplexer decoder.

k. means to connect output of said OR gate to
    clock input of resettable flip-flops(29,30&36
    of FIG.11).

l. means to connect the Q only outputs of said three
    flip-flops to the three input control gates
    of said TG analog switcher which mute the said
    red, blue and green primary video voltages or
    signals. (3ı,32,37 of FIG.11).

m.switch means to switch the three outputs
    of said flip-flop to a no-connect position
    (49&50 of FIG. 11).

n.switch means to switch any input control gate
    of said TG analog primary color muting switch to
    a $\pm V_{DD}$ buss bar thereby locking said primary
    color to a permanant "on" position.

o. switch means to switch any input control gate of the said TG analog primary color muting switches to any of the outputs of said flip flops for flexibility in presetting the resultant control wave form (FIG.9) for any existing lighting or lens filtering combinations.(49&50 of FIG.15).

p. switch means to switch the said imput control gate of said TG analog primary color muting switch to a $V_{SS}$ buss bar to cause said selected analog switch to turn "off" the said selected primary video signal permantly.

16. A laser lighting system process and apparatus for processing three-dimensional sterografic television holography (FIG.20) utilizing conventional lasers and assiciated optical and modulating control devices characterized in that;

a. means to modulate (34 of FIG. 20) said laser beam for color phased coherant light encoding by pulsed control module as in claim 15.

b. means to attach said laser to said camera (22 of fig.21).

c. means to adjust angle of said laser to said camera for sub-raster alignment (23& 24 of fig. 21).

d. means to synchronize the said attached television camera's pickup tubes, vertical and horizontal deflection coils (13& 42 of fig.20) to scan line by line synchronously with the scanning laser.

e. means to pre-set said laser (25,26,27, 28 of fig.20) to scan at the standard NTSC 262.5 horizontal scan rate per 1/60 second subraster field scan or optional PAL 312.5 horizontal 1/50th of a second subraster field scan.

f. means to automatically control the scan of the laser scan areato match the area being electronically scanned by the color pickup tube deflect ion coils of the said attached TV camera, (25A & 28A of fig. 20).

G. means to phase and split said laser beam
for variable laser beam intensity adjustment
ratio of primary coherant and interferance beams
by mean of $\frac{1}{4}$wave retarder(10 of fig. 20) and
cube polorizing beam splitter, (5 of fig.20).

h. half silvered mirror(4 of fig.20 and 18,18A of
fig.21) means to return interference beam back
into lens system of said TV camera at an adjustable angle from 0° to 90°,

i. means to position a photo-transitor (24 of fig
20) at the first horizontal line of a vertical
subraster sweep to produce a vertical drive
sync pulse to synchronize the said TV camera
pickup tubes' deflection coils.

j. means to position a photo transistor (13of fig.
20) optic pick up sensor at the first or start
of the beginning of each primary horizontal
laser scan sweep to produce a horizontal sync
pulse from the said scanning laser beam to
synchronize the horizontal deflection coils
of the said TV camera pickup tubes (1A,1B,
1C of fig.20)

k. apparatus as in claim 17 (fig.22) and claim
16f. including means to automatically control
the voltage of the laser's oscillating horizontal(37of fig.20) and vertical (12 of fig. 20)
scanning mirror magnets (16 & 32 of fog.20)
by means of variable horizontal and vertical
resistor pots (25A & 25B of fig.20) attached
physically to camera zoom worm gear (30 of fig.
22).

l. means to deflect said laser beam to primarily scan horizontally by means of vibrating mirror deflected at scan rate by ... means of electro-magnetic exciter(16of fig.20) pulsed at scan rate by means of horizontal oscilator amplifier (28of fig.20).

m. means to deflect said laser beam vertically by viberating mirror means (12 of fig. 20) deflected at vertical scan rate by second electro magnetic exciter means (22of fig.20) pulsed at scan rate by vertical oscilator amplifier means(25 of fig.20).

n. .optional deflection means to deflect horizontal scan of said laser by synchronized rotating mirror system means.

o. optional deflection means to deflect verticle scan of said laser by synchronized rotating mirror system means.

17. means and apparatus for a holografic twin
optical 'x' and 'y' axis lens mounting system
with dual zoom lens and focus ratio coupling to
the optical lens axis

a. means to rotate the said 'x' and 'y'
optical axis (fig.22) inwardly or outwardly
to change the point of interception of the
said 'x' and 'y' axis to intercept at the
back point dept of field of the selected initial
pre-focus of the twin lenses (L1 & L2 of fig.22).

b. means to mechanically synchronize focus of
the said twin lenses by a focus drive chain.
(3B of fig. 22)

c. means to mechanically synchronize the
the zoom angle of said twin lenses by a zoom focus
drive chain. (3B of fig.22)

d. means to mechanically link the said'x' and 'y'
angle of lens interception with a dual ratio sprock-
eted worm gear,rod (3D, 10 & 11 of fig.22) driven
by said zoom and focus chains as in claim 17 b & c.

e. means to make a selected ratio of zoom angle by
means of a selected ratio of the diameter of said
zoom sprocket to the diameter of said focus sprocket
as in claim d. of 17.

f. means to make the angle of interception of the
'x'and'y' axis a function of the selected ratio  of
said sprocketed worm gear rod (30 of fig.22)movement
to a selected length of a pinioned(12 of fig.22)
cantelever fulcrum (10B of fig.22)connecting the
'x'and 'y' axis lens housing bodies of the 'x'and'y'
optical system (13 & 14 of fig22), to make the
'x'and'y' angle of interception optically intercept
at said distance of selected zoom and focus ratio
setting.

— /4 —

g. means to pre-set focus to zoom ratio for initial focus set-up by means of fucus slip rings driven by said focus drive chain as in claim 17B (3 & 5 of fig. 22).

h. means to connect said dual sprocked worm gear r rod to a fastened extention plate from the said 'y' axis housingas in claim 17 f., by means of two nominally spaced apart threaded bearings mounted on said extended plate (8,9,7 of fig.22).

i. means to mount the left holografic lenns in front of said 'y' axis zoom lens by means of a plate the said extension plate as in claim 17 h. (8of fig.22)

j. means to mount the right holografic lens in front of said 'x' axis zoom lens by means of an extention plate mounted from the bottom of said 'x' axis optical housing (14 & 10B of fig.22).

—15—

18. Method, apparatus and process for generating
television signals for viewing and reproduction
of three-dimensional holografic visual scenes
utilizing a single axis television camera,
comprises;

   a. the apparatus as in claim 14 b,c,d,e,f,h
     including means to attach said holografic
     lens to lens hood of said camera as in
     claim 14

   b. apparatus as in claim 1 a,b,c including
     means as in circuit of fig.10 to mute said
     video signals of primary colors by means of
     said dual pulse phaser means including means
     to process a control waveform to mute and
     switch said video signals of said primary
     colors as in said waveform chart of fig.
     8 as in claim 14a,f,k, and as in claim
     15 a,c,d,f according to waveforms claimed
     in 14 a,b,l and as in claim 15.

   c. apparatus as in claim 16 including means to
     to optionally utilize a synchronous scanning
     laser lighting system means and apparatus
     as in claim 14g and j.

19. method, apparatus and process for generating
television signals for viewing and reproduction
of three-dimensional holografic visual scenes
utilizing a twin axis stereografic television
camera, comprises;

   a. the holografic lens(fig.12)apparatus as in
      claim  14, 14b, 14c, d,e,f,&h including means
      to attach said holografic lens in front of
      the left axis and right axis cameras and.
      conventional twin zoom lens (3 & 5 of fig. 14)
      as in claim 17, the dual lens tracking mechanism.
      (fig.22)


   b. means to process light imagry through two
      optical 'x' and 'y' axis (7&10of fig.14)
      with the 'x' axis processing only one selected
      primary color nominaly blue but not limited to
      blue.
   c. means to filter said selected primary color
      light beams through color filter (25B of fig.14)
      of said selected primary color .
   d. means to scan said filtered light imagry
      with said TV camera during 1st scan or subraster
      with said camera aligned to said 'x' axis  (25 of
      fig. 14).

   e.  means to amplify said blue video signal before
      further processing of said signal, as in claim 1.

   f. means to align to the y axis, the said diachroic
      mirror filter two color system, consisting
      of   partialy silvered gold-yellow dichroic
      mirror means and a full or reflecting mirrormeans

-17-

g. means to process light imagry of the
   said 'y' axis of claim 19,b with diachroic
   color(26 &26A of fig.14) filter means to
   process only the compliment or secondary
   yellow primary color combination of the
   selected color filtered and processed by the
   said 'x' axis, namely red and green since
   blue was selected for the 'y' .

h. means to align to the 'y' axis the 2nd and
   thirdscanning pick up tubes (30 & 29 of fig.14)
   nominaly the red and green pick up tubes
   (31 and 32 of fig.14)

i. means to amplify the outputs of said 2nd
   and third pickup tubes(30 & 29 of fig.14)

j. apparatus as in claim 1 a,b,c,including means
   to switch or mute the primary color output
   signals of said color video red, green and
   blue amplifiers as in said waveform chart
   of fig. 8 and with the holografic encoding
   as in circuit  of fig.11 and wave form switching
   method and apparatus of claim 15, according
   to waveform phasing of clam 14 a,b & c .

20. method, apparatus and process for generating
television signals for viewing and reproduction
of three-dimensional holografic visual scenes
utilizing two television cameras on a dual
'x' and 'y' axis mount, multiplexed to a
single camera control unit, comprises;

a. lens apparatus as in claim 14 b,c,d,e,f,h

b. dual lens tracking mechanism as in claim 14,i
   and all of claim 17.

c. Apparatus as in 1,a,b,c

d. primary color muting process of video
   signals as in claim 14 a,f,k, and waveform
   pulse charts of fig.9 as in claim 14 a,b,l
   and as in claim 15.

e. means to switch the two individual camera
   seperately and synchronously by two indiviual
   tri-pulse phasers of circuit of fig.11 as in
   claim 15.

f. synchronized means of laser scanning light
   system as in claim 14 g,j and as in claim 16

g. multiplexing means to multiplex the output
   of the switched video signals RBG of the
   said cameras through a triple 2-channel analog
   multiplexer/demultiplexer to a single
   camera control unit.

21. method and apparatus as in claims 1,2,3,4,5,6,7,
8,9,10,11,12,13,14,15,16,17,18,19 and 20 including
the additional use of a film projector and film camera
synchronized and powered by means of a sync power
amplifier(19 of fig.16)connected to the said $\overline{Q}$
output of said tri-pulse phaser of fig.11 as in
claim  , synchronized to the said stereo-grafic
holografic camera system to make a stereografic
holografic film copy of an original film copy.

22. method and apparatus as in claim 1,2,3,4,5,6,7,
8,9,10,11,12,13,14,15,16,17 including the additional
use of a film camera synchronized as in claim23
to utilize any of the three dimensional cameras
as claimed in claims 18,19 and 20; to make a film
or video three-dimensional or holografic copy
of an orginal conventional two-dimensional TV
monitor image of a visual scene.

Fig. 1

0034984

Fig. 2

Fig. 3

Fig. 4

**Fig.5**

**Fig.6**

**Fig.7**

T.V. TUBE

1ST SCAN

2ND SCAN

FIG.8

-5-

T.V. TUBE

FIG 9

Fig. 10

Fig. 11

−8−

12-c

6.

11

10

12-b

5

9C
7B
9B
9
7

3-A

13

1

3

2

4

12-a

FIG. 12

SINGLE LENS AXIS CAMERA

FIG. 13

FIG. 14

FIG. 15

FIG. 16

FIG 17

FIG. 18

FIG. 19

-1/4-

FIG. 20

FIG. 21

FIG. 22

0034984